# EUROPEAN PATENT APPLICATION

(11) **EP 2 869 564 A1**
(43) Date of publication of application: **06.05.2015**
(21) Application number: 13813818.5
(22) Date of filing: 28.06.2013
(51) Int. Cl.: H04N 7/00

(54) **IMAGE DECODING METHOD, IMAGE ENCODING METHOD, IMAGE DECODING DEVICE, IMAGE ENCODING DEVICE, AND IMAGE ENCODING AND DECODING DEVICE**

(30) Priority: 02.07.2012 US 201261667157 P
(71) Applicant: Panasonic Intellectual Property Corporation of America, Torrance, CA 90503 (US)
(72) Inventor: ESENLIK, Semih, 63225 Langen (DE); NARROSCHKE, Matthias, 63225 Langen (DE); KAMP, Steffen, 63225 Langen (DE); WEDI, Thomas, 63225 Langen (DE)
(74) Representative: Grünecker Patent- und Rechtsanwälte PartG mbB
(86) International application number: PCT/JP2013/004035
(87) International publication number: WO 2014/006860

(57) **Abstract**

An image decoding method capable of reducing processing load includes: obtaining a boundary control flag for jointly controlling a deblocking filter operation and a sample adaptive offset operation for a slice boundary of a current slice to be decoded included in a coded picture (S11); decoding the current slice (S12); performing the deblocking filter operation based on the boundary control flag only on at least one of a top slice boundary or a left slice boundary among all slice boundaries of the current slice that has been decoded (S13); and performing the sample adaptive offset operation dependent on the boundary control flag only on the at least one of the top slice boundary or the left slice boundary among all the slice boundaries of the current slice that has been decoded (S14).

## Description

### [Technical Field]

The present invention relates to image decoding methods of decoding coded moving pictures and to image coding methods of coding moving pictures.

### [Background Art]

Upon coding and decoding a moving picture, an image decoding method and image coding method have been proposed which apply a loop filter operation (in-loop filter operation) to pixels in the vicinity of a boundary between slices (slice boundary) (Non

Patent Literature 1).

### [Citation List]

### [Non Patent Literature]

[NPL 1] Joint Collaborative Team on Video Coding (JCT-VC) of ITU-T SG16 WP3 and ISO/IEC JTC1/SC29/WG11, 9th Meeting: Geneva, CH, 27 April - 7 May 2012, Title: High efficiency video coding (HEVC) text specification draft 7, Document: JCTVC-I1003_d5

### [Summary of Invention]

### [Technical Problem]

However, there is a problem that processing load is large with the image decoding method and image coding method according to Non Patent Literature 1.

The present invention provides an image decoding method and image coding method capable of reducing the processing load.

### [Solution to Problem]

An image decoding method according to an aspect of the present invention is an image decoding method of decoding a coded picture, the image decoding method including: obtaining a boundary control flag for jointly controlling a deblocking filter operation and a sample adaptive offset operation for a slice boundary of a current slice to be decoded included in the coded picture; decoding the current slice; performing the deblocking filter operation based on the boundary control flag only on at least one of a top slice boundary or a left slice boundary among all slice boundaries of the current slice that has been decoded; and performing the sample adaptive offset operation dependent on the boundary control flag only on the at least one of the top slice boundary or the left slice boundary among all the slice boundaries of the current slice that has been decoded.

General and specific aspects disclosed above may be implemented using a system, a method, an integrated circuit, a computer program, or a computer-readable recording medium such as a CD-ROM, or any combination of systems, methods, integrated circuits, computer programs, or computer-readable recording media.

### [Advantageous Effects of Invention]

The image decoding method and image coding method disclosed herein provide a reduction in processing load.

### [Brief Description of Drawings]

[FIG. 1A] FIG. 1A illustrates the structure of a picture.
[FIG. 1B] FIG. 1B illustrates the range for the deblocking filter operation controlled by the boundary control flag.
[FIG. 1C] FIG. 1C illustrates the range for SAO controlled by the boundary control flag.
[FIG. 2] FIG. 2 is a view for illustrating GDR.
[FIG. 3] FIG. 3 is a flow chart illustrating an image coding method involving GDR.
[FIG. 4] FIG. 4 shows a slice refreshed by GDR.
[FIG. 5] FIG. 5 illustrates the relation between the boundary control flags for the slices and the loop filter operation for the slice boundaries.
[FIG. 6] FIG. 6 is a block diagram illustrating the configuration of the image coding apparatus according to Embodiment 1.
[FIG. 7A] FIG. 7A is for illustrating the slice boundary control according to Embodiment 1.
[FIG. 7B] FIG. 7B is for illustrating the slice boundary control according to Embodiment 1.
[FIG. 7C] FIG. 7C is for illustrating the slice boundary control according to Embodiment 1.
[FIG. 8] FIG. 8 is for illustrating the slice boundary control according to Embodiment 1 in further detail.
[FIG. 9] FIG. 9 is a flow chart illustrating a processing operation of the image coding apparatus according to Embodiment 1.
[FIG. 10] FIG. 10 is a block diagram illustrating the configuration of the image decoding apparatus according to Embodiment 1.
[FIG. 11] FIG. 11 is a flow chart illustrating a processing operation of the image decoding apparatus according to Embodiment 1.
[FIG. 12] FIG. 12 is for illustrating the control of SAO on slice boundaries according to Variation 1 of Embodiment 1.
[FIG. 13] FIG. 13 shows an example of a mask for SAO in a corner area of a slice according to Variation 2 of Embodiment 1.
[FIG. 14] FIG. 14 shows a different example of a mask for SAO in a corner area of a slice according to Variation 2 of Embodiment 1.
[FIG. 15A] FIG. 15A shows yet another example of a mask for SAO in a corner area of a slice according to Variation 2 of Embodiment 1.
[FIG. 15B] FIG. 15B shows yet another example of a mask for SAO in a corner area of a slice according to Variation 2 of Embodiment 1.
[FIG. 15C] FIG. 15C shows yet another example of a mask for SAO in a corner area of a slice according to Variation 2 of Embodiment 1.
[FIG. 15D] FIG. 15D shows yet another example of a mask for SAO in a corner area of a slice according to Variation 2 of Embodiment 1.
[FIG. 15E] FIG. 15E shows yet another example of a mask for SAO in a corner area of a slice according to Variation 2 of Embodiment 1.
[FIG. 15F] FIG. 15F shows yet another example of a mask for SAO in a corner area of a slice according to Variation 2 of Embodiment 1.
[FIG. 16] FIG. 16 shows the positional relationship between a middle pixel subject to SAO and surrounding pixels according to Variation 2 of Embodiment 1.
[FIG. 17] FIG. 17 shows an example of a 45° SAO mask in a corner area of a slice according to Variation 2 of Embodiment 1.
[FIG. 18] FIG. 18 shows an example of a 135° SAO mask in a corner area of a slice according to Variation 2 of Embodiment 1.
[FIG. 19A] FIG. 19A is a flow chart illustrating the image decoding method according to an aspect of the present invention.
[FIG. 19B] FIG. 19B is a block diagram illustrating the configuration of the image decoding apparatus according to an aspect of the present invention.
[FIG. 20A] FIG. 20A is a flow chart illustrating the image decoding method according to another aspect of the present invention.
[FIG. 20B] FIG. 20B is a block diagram illustrating the configuration of the image decoding apparatus according to another aspect of the present invention.
[FIG. 21A] FIG. 21A is a flow chart illustrating the image coding method according to an aspect of the present invention.
[FIG. 21B] FIG. 21B is a block diagram illustrating the configuration of the image coding apparatus according to an aspect of the present invention.
[FIG. 22A] FIG. 22A is a flow chart illustrating the image coding method according to another aspect of the present invention.
[FIG. 22B] FIG. 22B is a block diagram illustrating the configuration of the image coding apparatus according to another aspect of the present invention.
[FIG. 23] FIG. 23 shows an overall configuration of a content providing system for implementing content distribution services.
[FIG. 24] FIG. 24 shows an overall configuration of a digital broadcasting system.
[FIG. 25] FIG. 25 shows a block diagram illustrating an example of a configuration of a television.
[FIG. 26] FIG. 26 shows a block diagram illustrating an example of a configuration of an information reproducing/recording unit that reads and writes information from and on a recording medium that is an optical disk.
[FIG. 27] FIG. 27 shows an example of a configuration of a recording medium that is an optical disk.
[FIG. 28A] FIG. 28A shows an example of a cellular phone.
[FIG. 28B] FIG. 28B is a block diagram showing an example of a configuration of a cellular phone.
[FIG. 29] FIG. 29 illustrates a structure of multiplexed data.
[FIG. 30] FIG. 30 schematically shows how each stream is multiplexed in multiplexed data.
[FIG. 31] FIG. 31 shows how a video stream is stored in a stream of PES packets in more detail.
[FIG. 32] FIG. 32 shows a structure of TS packets and source packets in the multiplexed data.
[FIG. 33] FIG. 33 shows a data structure of a PMT.
[FIG. 34] FIG. 34 shows an internal structure of multiplexed data information.
[FIG. 35] FIG. 35 shows an internal structure of stream attribute information.
[FIG. 36] FIG. 36 shows steps for identifying video data.
[FIG. 37] FIG. 37 shows an example of a configuration of an integrated circuit for implementing the moving picture coding method and the moving picture decoding method according to each of embodiments.
[FIG. 38] FIG. 38 shows a configuration for switching between driving frequencies.
[FIG. 39] FIG. 39 shows steps for identifying video data and switching between driving frequencies.
[FIG. 40] FIG. 40 shows an example of a look-up table in which video data standards are associated with driving frequencies.
[FIG. 41A] FIG. 41A is a diagram showing an example of a configuration for sharing a module of a signal processing unit.
[FIG. 41B] FIG. 41B is a diagram showing another example of a configuration for sharing a module of the signal processing unit.

### [Description of Embodiments]

### (Underlying Knowledge Forming Basis of the Present Invention)

In relation to the image decoding method and image coding method according to Non Patent Literature 1 disclosed in the Background section, the inventors have found the problem indicated below.

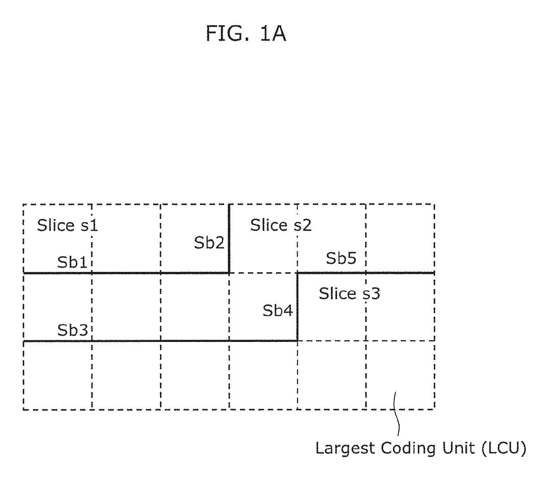

FIG. 1A illustrates the structure of a picture.

A picture is configured of at least one slice, and as FIG. 1A shows, includes, for example, three slices: slice s1, slice s2, and slice s3. It should be noted that "picture" is used to mean the same thing as "frame". A slice is made up of at least one largest coding unit (LCU).

Each slice has a boundary control flag (slice_loop_filter_across_slices_enabled_flag). This boundary control flag is a flag for controlling a loop filter operation (in-loop filter operation) for a boundary of a slice (slice boundary), such as a deblocking filter operation and a sample adaptive offset operation (SAO). This loop filter operation is performed before the reconstructed image used in the generation of a prediction image is displayed, or before that reconstructed image is stored in the frame buffer. The deblocking filter operation is an operation for suppressing block distortion resulting from a moving picture being coded or decoded block-by-block. This deblocking filter operation improves the subjective quality of the image. SAO is an operation which adds an offset value to a pixel value of each pixel included in the reconstructed image, and includes a band offset and an edge offset. Moreover, this SAO improves both subjective quality and objective quality of the image. It should be noted that the candidate for the loop filter operation controlled by the boundary control flag is a slice boundary, but more specifically, is at least one pixel in the vicinity of the slice boundary.

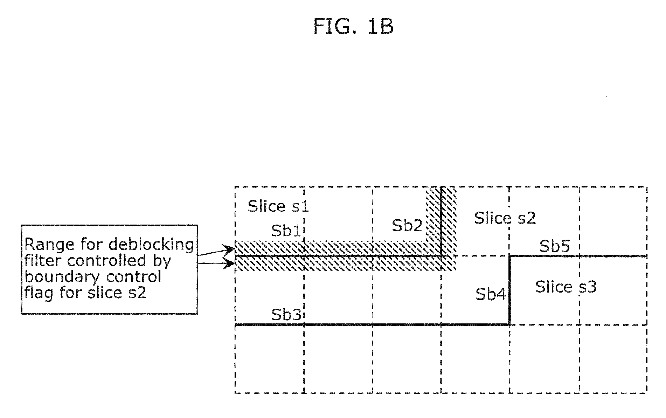

FIG. 1B illustrates the range designated as a candidate for the deblocking filter operation controlled by the boundary control flag.

For example, the deblocking filter operation for the top slice boundary sb1 of slice s2 and the left slice boundary sb2 of slice s2 is controlled by the boundary control flag for slice s2. In other words, when boundary control flag = 0, the deblocking filter operation is not performed on the pixels in the vicinity of slice boundary sb1 and sb2 (sample). On the other hand, when boundary control flag = 1, the deblocking filter operation is performed on the pixels in the vicinity of slice boundary sb1 and slice boundary sb2. In this way, the deblocking filter operation is switched ON and OFF in accordance with the boundary control flag.

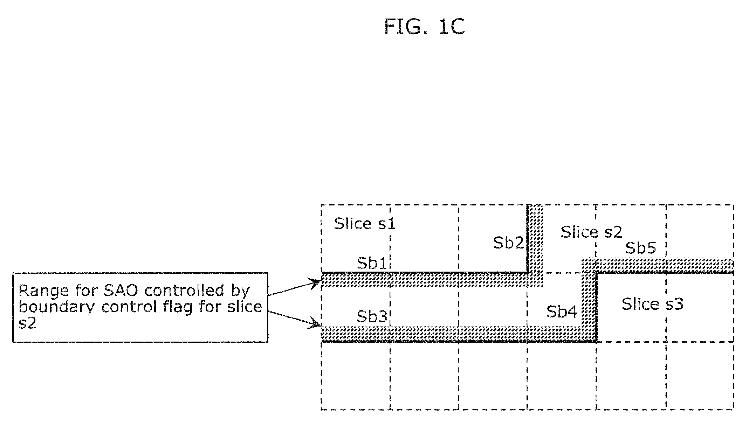

FIG. 1C illustrates the range designated as a candidate for SAO controlled by the boundary control flag.

Along with the above-described deblocking filter operation, the boundary control flag for slice s2 controls SOA for the top, left, and bottom slice boundaries sb1, sb2, sb3, sb4, and sb5 of slice s2. In other words, when boundary control flag = 0, SAO is performed in accordance with an operation mode which does not use pixels in different slices (slice s1, s3) (padding or padding mode), on pixels in slice s2 that are in the vicinity of those slice boundaries. On the other hand, when boundary control flag = 1, SAO is performed in accordance with an operation mode which allows the use of pixels in different slices (slice s1, s3) (normal operation or normal operation mode), on pixels in slice s2 that are in the vicinity of those slice boundaries. In this way, the operation mode of SAO switches in accordance with the boundary control flag.

In other words, it is possible to set the boundary control flags to indicate different values for each slice, and by setting a boundary control flag to 0, it is possible to suppress dependency between slices, which occurs as a result of the loop filter operation, in the deblocking filter operation or SAO. Since this boundary control flag is capable of suppressing dependency between slices, it can be used to functionally perform parallel coding or decoding of an image, or the refresh operation known as gradual decoder refresh (GDR).

Here, GDR refers to, for example, random access, where data not received by the image decoding apparatus is referred to and a moving picture is gradually recovered in a plurality of pictures to clear pictures.

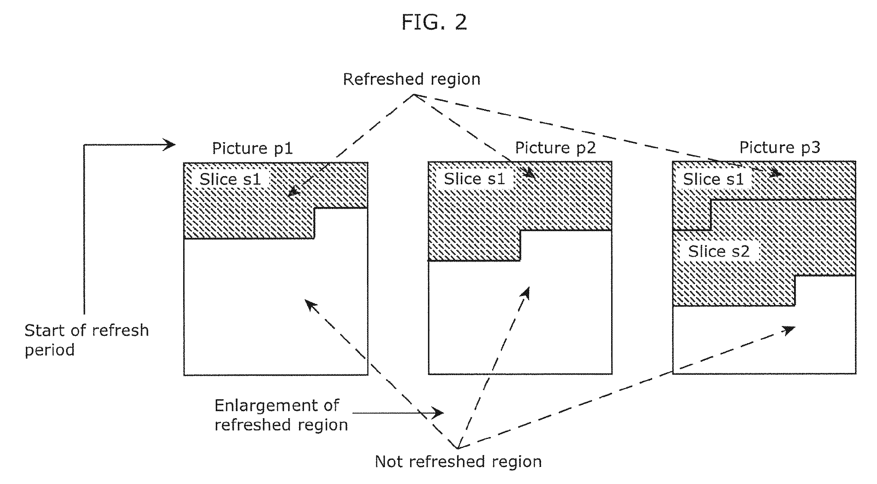

FIG. 2 is a view for illustrating GDR.

When GDR starts with picture p1, the leading slice s1 of picture p1 is coded with intra prediction only. In other words, slice s1 is coded in refresh mode. As a result, slice s1 is coded without referring to pictures prior in coding order to picture p1. This sort of slice s1 is a region which has been refreshed (hereinafter referred to as a refreshed region). Moreover, regions of picture p1 other than slice s1 are regions which have not been refreshed (hereinafter referred to as not refreshed region).

The leading slice s1 of picture p2 is coded by motion compensation in which only slice s1 of picture p1 can be referred, or by intra prediction. In other words, slice s1 of picture p2 is also coded in refresh mode. This slice s1 of picture p2 is also a refreshed region. The refreshed region in picture p2 has grown.

The leading slice s1 and second slice s2 of picture p3 is coded by motion compensation which can only refer to slice s1 of picture p1 and slice s1 of picture p2, or by intra prediction. In other words, slice s1 and slice s2 of picture p3 are also coded in refresh mode. These slices s1 and s2 of picture p3 are also refreshed regions. The refreshed region in picture p3 has grown even further. In other words, when GDR begins, the refreshed regions included in the pictures gradually grow in size in coding order of the pictures.

At the end of GDR, all regions of the picture will be refreshed. Hence, GDR takes as long as the time that is necessary to refresh all regions of the picture. This time is transmitted to the image decoding apparatus as information including supplemental enhancement information (SEI).

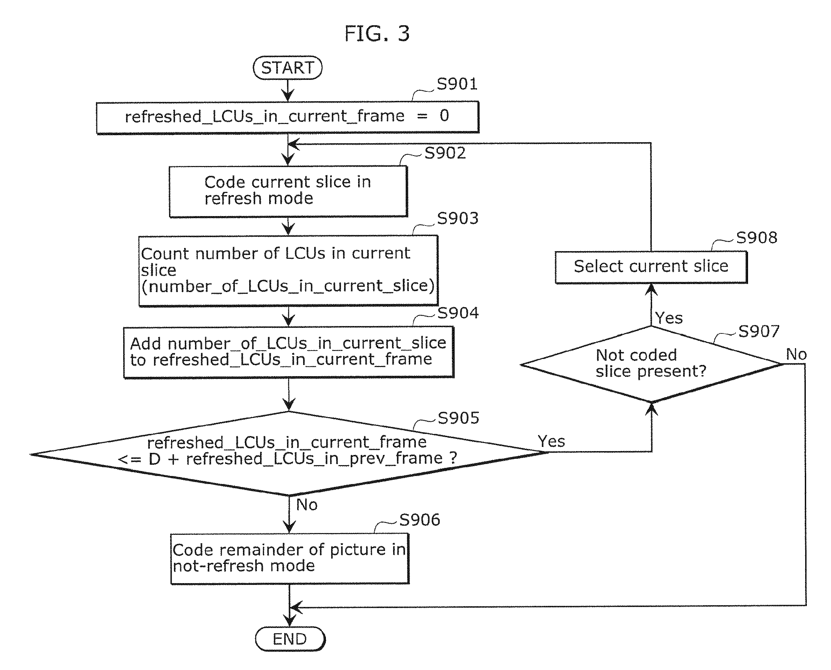

FIG. 3 is a flow chart illustrating an image coding method involving GDR.

When the image coding apparatus begins the coding involving GDR, the image coding apparatus first sets a first control parameter (refreshed_LCUs_in_current_frame) to 0 (step S901). Next, the image coding apparatus codes a current slice (current slice to be coded) in refresh mode (step S902). It should be noted that at the beginning of the coding involving GDR, the leading slice in the picture is selected as a current slice. The image coding apparatus then counts the number of LCUs in the current slice (number_of_LCUs_in_current_slice) (step S903).

Next, the image coding apparatus adds the LCU count to the first control parameter (step S904). Here, the image coding apparatus determines whether this first control parameter is less than or equal to a sum of (i) a second control parameter indicating the number of LCUs coded in refresh mode in the previous picture (refreshed_LCUs_in_prev_frame) and (ii) delta D (step S905). Delta D is a parameter used to control the time required for GDR. When the value of this delta D is high, only a small number of pictures are required to refresh all regions of a single picture. When the value of delta D is low, then more number of pictures is required.

When the image coding apparatus determines that the first control parameter is not less than or equal to the above-described sum (No in step S905), the image coding apparatus codes the remaining regions in the picture in not-refresh mode (step S906). On the other hand, when the image coding apparatus determines that the first control parameter is less than or equal to the above-described sum (Yes in step S905), the image coding apparatus determines whether there is an uncoded slice in the picture (step S907). Here, when the image coding apparatus determines that there is an uncoded slice (Yes in step S907), the image coding apparatus selects the uncoded slice as the current slice (step S908), and repeats the process from step S902.

In this way, when the image coding apparatus starts coding slices, the image coding apparatus must determine whether a current slice is to be coded in refresh mode or not. However, the image coding apparatus can only make this determination for a current slice, that is to say, can only make this determination at the beginning of the coding of a current slice. In other words, when the image coding apparatus is coding a current slice, the image coding apparatus cannot determine whether the next slice is to be coded in refresh mode or not. This determination can only be made at the beginning of the coding of the next slice.

Moreover, with GDR, dependency between refreshed and not refreshed regions must be avoided. As such, using the boundary control flag in a slice header, the loop filter operation is controlled for the slice boundaries of the slice belonging to the slice header to prevent not refreshed region data from getting mixed in with the refreshed region.

Here, in the edge offset in SAO, each pixel designated as an offset candidate is classified into a certain class by comparing that pixel with two neighboring pixels. Each class is defined by an edge index.

Consequently, when SAO is performed on pixels in the vicinity of a slice boundary of the current slice (current pixels), there are times when pixels outside of the current slice are compared with current pixels as pixels which neighbor the current pixels. In this case, when comparison with the pixels outside of the current slice needs to be avoided, the boundary control flag is set to 0. This sets the edge index to 0 and the above-described comparison is not made regarding pixels in the vicinity of a slice boundary of the current slice (current pixels).

For example, as FIG. 1C shows, in SAO for pixels in the vicinity of a slice boundary in slice s2 (current pixels), there are times when pixels outside of slice s2 (pixels in slice s1 or slice s3) are used as comparison candidates. In this case, when use of pixels outside of slice s2 as comparison candidates needs to be avoided, the boundary control flag for slice s2 is set to 0. This sets the edge index to 0 and the pixels outside of slice s2 are not used as comparison candidates for the pixels in the vicinity of a slice boundary of slice s2 (current pixels).

In SAO, when the edge index for a current pixel is 0, an offset value of 0 is added to the pixel value of that current pixel. In this way, in SAO, the process of adding an offset value of 0 to the pixel value of a current pixel without comparing the current pixel with two neighboring pixels is called padding (padding mode). In other words, padding is one operation mode of SAO, and an operation mode which does not use pixels from a different slice than the current slice. In SAO, this padding makes it possible to avoid not refreshed region data from being mixed in with the refreshed region. It should be noted that in SAO, the operation mode which compares the current pixel with two pixels neighboring the current pixel to set the edge index for that current pixel is called normal operation (normal operation mode).

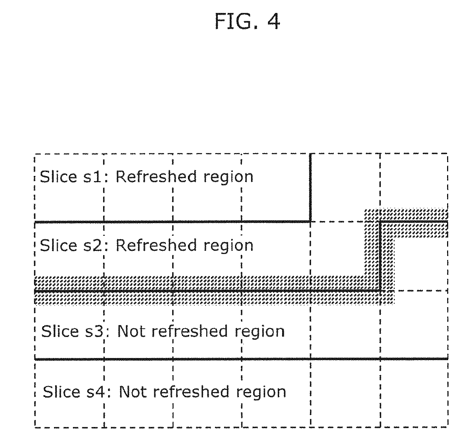

FIG. 4 shows a slice refreshed by GDR.

As FIG. 4 shows, slice s1 and slice s2 are refreshed, and slice s3 and slice s4 are not refreshed.

In this case, it is required that data dependency from slice s3 in the not refreshed region to slice s2 in the refreshed region does not occur. In other words, it is required that the loop filter operation for slice s2 does not refer to pixels in slice s3. This prevents the contamination of data from slice s3 in the not refreshed region to slice s2 in the refreshed region.

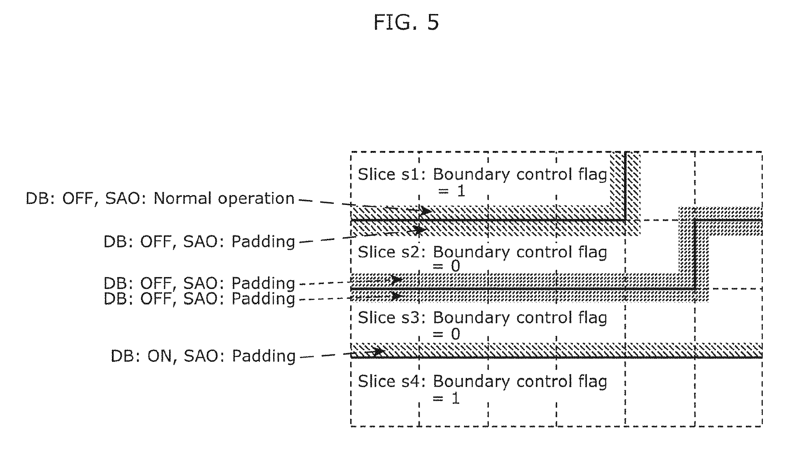

FIG. 5 illustrates the relation between the boundary control flags for the slices and the loop filter operation for the slice boundaries. It should be noted that BD in FIG. 5 refers to the deblocking filter operation.

In order to achieve the requirement that data dependency from slice s3 to slice s2 shown in FIG. 4 does not occur, the boundary control flag for slice s3 must be set to 0 and the deblocking filter operation for the slice boundary between slice s2 and slice s3 must be turned OFF. Furthermore, the boundary control flag for slice s2 must be set to 0 and the SAO for slice s2 must not refer to the pixels in slice s3. This makes it possible to avoid data dependency from slice s3 to slice s2 from occurring as a result of the loop filter operation.

However, as was illustrated using FIG. 3, it is not possible to determine whether slice s3 is to be coded in not-refresh mode or not while coding slice s2.

In other words, it is not possible to determine which one of the refresh mode and not-refresh mode should be used to code the next slice unless it is after the slice header of a current slice is coded and all of the coding for that current slice has been completed. As such, after the slice header of a current slice is coded and all of the coding for that current slice has been completed, there are times when it is necessary to modify the boundary control flag in a slice header of the current slice when it is determined that the next slice (for example slice s3) is to be coded in not-refresh mode. In this case, this means the coding of the slice header requires two passes, and this is problematic in that it increases implementation cost and increases the processing load. In other words, saving all processed slices in memory is required in order to modify the slice header afterward, and as a result, implementation cost of mainly memory increases.

Moreover, in low latency applications, such as television systems, slices are further fragmented into smaller packets in order to reduce transmission latency. In this kind of application, a slice is further fragmented into smaller fragmentation units, and the fragmentation units are each transmitted to the image decoding apparatus before all of the coding for the slice is complete.

However, as described above, after the whole slice is coded, there are times when it is necessary to modify the boundary control flag. As a result, the fragmentation of the slice into smaller units cannot reduce the transmission latency, since it is not possible to quickly transmit the first fragmentation unit that includes the slice header which might need to be modified later.

Furthermore, in the case of multi-slice operation which is performed in parallel with the decoding of a plurality of slices, waiting for the coding of the next slice is required in order to perform SAO on the current slice, creating a problem that processing load is increased. For example, when the boundary control flag of the current slice indicates 1, it is necessary to perform SAO by normal operation on pixels in the current slice that are in the vicinity of the bottom and right slice boundaries of the current slice. However, in order to perform this SAO, pixels in the next slice opposite the above-described bottom and right slice boundaries of the current slice are required. As a result, regardless of what value the boundary control flag for the next slice indicates (0 or 1), the SAO on the current slice cannot be performed until the coding for the next slice done.

As described herein, there is a problem with the image decoding method and image coding method according to Non Patent Literature 1 that processing load is large.

In order to solve this problem, an image decoding method according to an aspect of the present invention is an image decoding method of decoding a coded picture, the image decoding method including: obtaining a boundary control flag for jointly controlling a deblocking filter operation and a sample adaptive offset operation for a slice boundary of a current slice to be decoded included in the coded picture; decoding the current slice; performing the deblocking filter operation based on the boundary control flag only on at least one of a top slice boundary or a left slice boundary among all slice boundaries of the current slice that has been decoded; and performing the sample adaptive offset operation dependent on the boundary control flag only on the at least one of the top slice boundary or the left slice boundary among all the slice boundaries of the current slice that has been decoded.

With this, the slice boundary designated as a candidate for sample adaptive offset operation (SAO) controlled by the boundary control flag (slice_loop_filter_across_slices_enabled_flag) for the current slice is, just like with the deblocking filter operation, limited to only at least one of the top or bottom slice boundaries among all the slice boundaries of the current slice. As such, even if the boundary control flag for the current slice indicates 1, if the boundary control flag for the next slice indicates 0, loop filter operation (deblocking filter operation and SAO) can be performed on the current slice and the current slice can be output or displayed without having to wait for the next slice to be coded. This makes it possible to reduce the processing load.

Moreover, with the image coding method, it is possible to perform the same process as the loop filter operation using the boundary control flag in the image decoding method according to an aspect of the present invention. In this case, the loop filter operation for slice boundaries (bottom slice boundary and right slice boundary of the current slice) between the current slice and the next slice is not controlled by the boundary control flag for the current slice. As such, when image coding involving GDR is performed, there is no need to modify the boundary control flag coded before the current slice after the current slice has been coded, even if it is known that the next slice is a not refreshed region. This makes it possible to reduce the processing load.

In order to solve this problem, an image decoding method according to an aspect of the present invention is an image decoding method of decoding a coded picture, the image decoding method including: obtaining a boundary control flag for controlling a sample adaptive offset operation for a slice boundary of a current slice to be decoded included in the coded picture; decoding the current slice; and performing the sample adaptive offset operation in accordance with the boundary control flag jointly on at least one pixel in the current slice that has been decoded and on at least one pixel in a different slice that has been decoded, the pixels being in a vicinity of at least one of a top slice boundary or a left slice boundary of the current slice.

With this, the sample adaptive offset operation (SAO) controlled by the boundary control flag (slice_loop_filter_across_slices_enabled_flag) for the current slice is, just like with the deblocking filter operation, is performed jointly on not only pixels in the current slice that are in the vicinity of at least one of the top or bottom slice boundaries of the current slice, but on pixels in a different slice as well. As such, even if the boundary control flag for the current slice indicates 1, if the boundary control flag for the next slice indicates 0, loop filter operation (deblocking filter operation and SAO) can be performed on the current slice and the current slice can be output or displayed without having to wait for the next slice to be coded. This makes it possible to reduce the processing load.

Moreover, with the image coding method, it is possible to perform the same process as the loop filter operation using the boundary control flag in the image decoding method according to an aspect of the present invention. In other words, the loop filter operation for slice boundaries (bottom slice boundary and right slice boundary of the current slice) between the current slice and the next slice is not controlled by the boundary control flag for the current slice. As such, when image coding involving GDR is performed, there is no need to modify the boundary control flag for the current slice after the current slice has been coded, even if it is known that the next slice is a not refreshed region. This makes it possible to reduce the processing load.

Moreover, in the performing of the sample adaptive offset operation, an operation mode of the sample adaptive offset operation may be switched in accordance with the boundary control flag, and the sample adaptive offset operation may be performed according to the operation mode selected as a result of the switching. For example, in the performing of the sample adaptive offset operation, when the boundary control flag indicates 0, the operation mode of the sample adaptive offset operation may be switched to a padding mode which adds an offset value of 0 to a pixel designated as an offset candidate, and the sample adaptive offset operation may be performed according to the padding mode. More specifically, the sample adaptive offset operation may include a plurality of operation modes classified based on characteristics in an edge of the pixel designated as the offset candidate, each of the plurality of operation modes being allocated an edge index, and in the performing of the sample adaptive offset operation, when the boundary control flag indicates 0, the edge index may be set to 0 to switch the operation mode of the sample adaptive offset operation to the padding mode.

With this, when the boundary control flag is 0, the padding mode makes it possible to cause the sample adaptive offset operation to not actually function. Since sample adaptive offset operation is not actually performed on at least one of the top slice boundary or the left slice boundary of the current slice, that is to say, on pixels in the vicinity of at least one of the top or left slice boundaries, it is possible to suppress data dependency between (i) a different slice opposite the at least one of the top or left slice boundaries of the current slice and (ii) the current slice. With this, it is possible to easily perform the multi-slice operation performed in parallel with the decoding of a plurality of slices.

Moreover, the deblocking filter operation may switch between ON and OFF based on the boundary control flag, and the deblocking filter operation may be performed only when the deblocking filter operation is switched ON.

With this, for example, when the boundary control flag is 0, it is possible to keep the deblocking filter operation from functioning by switching the deblocking filter operation OFF. Since the deblocking filter operation is not performed on at least one of the top slice boundary or the left slice boundary of the current slice, it is possible to suppress data dependency between (i) a different slice opposite the at least one of the top or left slice boundaries of current slice and (ii) the current slice. With this, it is possible to easily perform the multi-slice operation performed in parallel with the decoding of a plurality of slices.

Moreover, when the boundary control flag indicates 0, the deblocking filter operation may be switched OFF to bypass the deblocking filter operation, and in the performing of the sample adaptive offset operation, the operation mode of the sample adaptive offset operation may be switched to a padding mode which adds an offset value of 0 to a pixel value, and the sample adaptive offset operation may be performed according to the padding mode.

With this, when the boundary control flag is 0, since the deblocking filter operation is not performed on, and sample adaptive offset operation is not actually performed on at least one of the top slice boundary or the left slice boundary of the current slice, it is possible to further suppress data dependency between (i) a different slice opposite the at least one of the top or left slice boundaries of the current slice and (ii) the current slice. With this, it is possible to even more easily perform the multi-slice operation performed in parallel with the decoding of a plurality of slices.

Moreover, when a pixel designated as a candidate for the sample adaptive offset operation dependent on the boundary control flag is a specific pixel also designated as a candidate for a sample adaptive offset operation dependent on an other boundary control flag for a different slice, in the performing of the sample adaptive offset operation, when at least one of the boundary control flag or the other boundary control flag indicates 0, the operation mode of the sample adaptive offset operation may be switched to the padding mode, and the sample adaptive offset operation may be performed on the specific pixel according to the padding mode.

With this, when a plurality of boundary control flags for one pixel (the specific pixel) are competing for control of the sample adaptive offset operation, a boundary control flag indicating 0 among those boundary control flags has priority. As a result, it is possible to adequately perform the sample adaptive offset operation on the specific pixel.

In order to solve the above-described problem, an image coding method according to an aspect of the present invention is an image coding method of coding a picture, the image coding method including: coding a boundary control flag for jointly controlling a deblocking filter operation and a sample adaptive offset operation for a slice boundary of a current slice to be coded included in the picture; coding the current slice; reconstructing the current slice from data generated by the coding of the current slice; performing the deblocking filter operation based on the boundary control flag only on at least one of a top slice boundary or a left slice boundary among all slice boundaries of the current slice that has been reconstructed; and performing the sample adaptive offset operation dependent on the boundary control flag only on the at least one of the top slice boundary or the left slice boundary among all the slice boundaries of the current slice that has been reconstructed.

With this, the slice boundary designated as a candidate for sample adaptive offset operation (SAO) controlled by the boundary control flag (slice_loop_filter_across_slices_enabled_flag) for the current slice is, just like with the deblocking filter operation, limited to only at least one of the top or bottom slice boundaries among all the slice boundaries of the reconstructed current slice. As such, even if the boundary control flag for the current slice indicates 1, if the boundary control flag for the next slice indicates 0, without waiting for the reconstruction of the next slice, loop filter operation (deblocking filter operation and SAO) can be performed on the reconstructed current slice, and the reconstructed current slice can be used in the generation of a prediction image. This makes it possible to reduce the processing load.

Moreover, the loop filter operation for slice boundaries (bottom slice boundary and right slice boundary of the current slice) between the reconstructed current slice and the reconstructed next slice is not controlled by the boundary control flag for the current slice. As such, when image coding involving GDR is performed, there is no need to modify the boundary control flag coded before the current slice after the current slice has been coded, even if it is known that the next slice is a not refreshed region. This makes it possible to reduce the processing load.

In order to solve the above-described problem, an image coding method according to an aspect of the present invention is an image coding method of coding a picture, the image coding method including: coding a boundary control flag for controlling a sample adaptive offset operation for a slice boundary of a current slice to be coded included in the picture; coding the current slice; reconstructing the current slice from data generated by the coding of the current slice; and performing the sample adaptive offset operation in accordance with the boundary control flag jointly on at least one pixel in the current slice that has been reconstructed and on at least one pixel in a different slice that has been reconstructed, the pixels being in a vicinity of at least one of a top slice boundary or a left slice boundary of the current slice.

With this, the sample adaptive offset operation (SAO) controlled by the boundary control flag (slice_loop_filter_across_slices_enabled_flag) for the current slice is, just like with the deblocking filter operation, performed jointly on not only pixels in the reconstructed current slice that are in the vicinity of at least one of the top or bottom slice boundaries of the reconstructed current slice, but on pixels in a different reconstructed slice that are in the vicinity of at least one of the top or bottom slice boundaries of the reconstructed current slice as well. As such, even if the boundary control flag for the current slice indicates 1, if the boundary control flag for the next slice indicates 0, without waiting for the reconstruction of the next slice, loop filter operation (deblocking filter operation and SAO) can be performed on the reconstructed current slice, and the reconstructed current slice can be used in the generation of a prediction image. This makes it possible to reduce the processing load.

Moreover, the loop filter operation for pixels in the vicinity of slice boundaries (bottom slice boundary and right slice boundary of the current slice) between the reconstructed current slice and the reconstructed next slice is not controlled by the boundary control flag for the current slice. As such, when image coding involving GDR is performed, there is no need to modify the boundary control flag coded before the current slice after the current slice has been coded, even if it is known that the next slice is a not refreshed region. This makes it possible to reduce the processing load.

These general and specific aspects may be implemented using a system, a method, an integrated circuit, a computer program, or a computer-readable recording medium such as a CD-ROM, or any combination of systems, methods, integrated circuits, computer programs, or computer-readable recording media.

Hereinafter, embodiments are specifically described with reference to the Drawings.

Each of the embodiments described below shows a general or specific example. The numerical values, shapes, materials, structural elements, the arrangement and connection of the structural elements, steps, the processing order of the steps etc. shown in the following embodiments are mere examples, and therefore do not limit the scope of the Claims. Therefore, among the structural elements in the following embodiments, structural elements not recited in any one of the independent claims are described as arbitrary structural elements. Moreover, in the following descriptions, there are instances in which the term "coding" is used to mean "encoding".

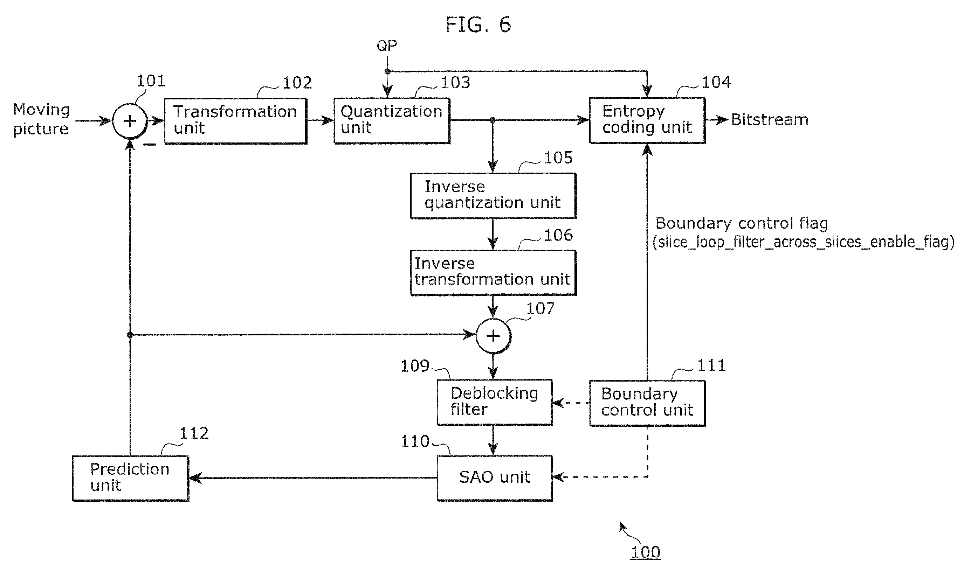

(Embodiment 1) FIG. 6 is a block diagram illustrating the configuration of the image coding apparatus according to this embodiment.

The image coding apparatus 100 includes a subtractor 101, a transformation unit 102, a quantization unit 103, an entropy coding unit 104, an inverse quantization unit 105, an inverse transformation unit 106, an adder 107, a deblocking filter 109, an SAO unit 110, a boundary control unit 111, and a prediction unit 112.

For each block included in the moving picture, the subtractor 101 calculates, as a differential image, the difference between a block and a prediction image generated by the prediction unit 112.

The transformation unit 102 generates a coefficient block including at least one frequency coefficient, by performing an orthogonal transformation, such as cosine transformation, on the differential image.

The quantization unit 103 quantizes each frequency coefficient included in the coefficient block according to a quantization parameter (QP) to generate a quantization block including at least one quantization value.

The entropy coding unit 104 generates a bitstream by entropy coding each quantization value included in the quantization block, the above-described quantization parameter, and the boundary control flag.

The inverse quantization unit 105 restores the coefficient block including at least one frequency coefficient by inverse quantizing the above-described quantization block. It should be noted that this coefficient block is not the same as the coefficient block generated by the transformation unit 102, and includes a quantization margin of error.

The inverse transformation unit 106 generates a decoded differential image by performing an inverse orthogonal transformation, such as inverse discrete cosine transformation, on the coefficient block restored by the inverse quantization unit 105.

The adder 107 generates a reconstructed image by adding the decoded differential image and the prediction image generated by the prediction unit 112.

The deblocking filter 109 obtains at least one reconstructed image from the adder 107, and performs the deblocking filter operation on a given boundary of the at least one reconstructed image. Here, the deblocking filter 109 performs the deblocking filter operation on a given slice boundary of the current slice by in accordance with control by the boundary control unit 111.

When the SAO unit 110 obtains at least one reconstructed image from the deblocking filter 109, the SAO unit 110 performs SAO on the obtained at least one reconstructed image. Here, the SAO unit 110 performs SAO on a given slice boundary of the current slice made up of these reconstructed images in accordance with control by the boundary control unit 111.

The prediction unit 112 generates a prediction image of the current block using the current slice on which SAO has been performed, and outputs the prediction image to the subtractor 101 and the adder 107.

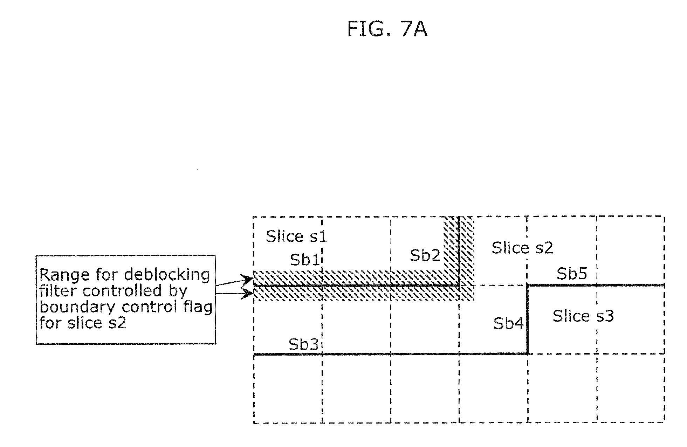

FIG. 7A through FIG. 7C are for illustrating the boundary control according to this embodiment.

The boundary control unit 111 sets the boundary control flag for a current slice (current slice to be coded).

The boundary control flag (slice_loop_filter_across_slices_enable_flag) is for jointly controlling each loop filter operation of the deblocking filter operation and SAO. In other words, the boundary control flag is used to switch the deblocking filter operation ON and OFF, and switch the operation mode of SAO between the normal operation (normal operation mode) and padding (padding mode).

As FIG. 7A shows, the slice boundary designated as a candidate for deblocking filter operation controlled by the boundary control flag according to this embodiment is at least one of the top slice boundary or the left slice boundary among all slice boundaries of the current slice corresponding to the boundary control flag. More specifically, when the current slice is slice s2, based on the boundary control flag for slice s2, deblocking filter operation is performed only on the top slice boundary sb1 and the left slice boundary sb2 of all slice boundaries sb1 to sb5 of slice s2. It should be noted that when a current slice has a top slice boundary and a left slice boundary, these slice boundaries become candidates for deblocking filter operation, and when a current slice only has one of these slice boundaries, that one slice boundary becomes a candidate for deblocking filter operation. Moreover, the deblocking filter operation is performed on at least one pixel in the current slice that is in the vicinity of the slice boundary and on at least one pixel in a different slice in the vicinity of the slice boundary.

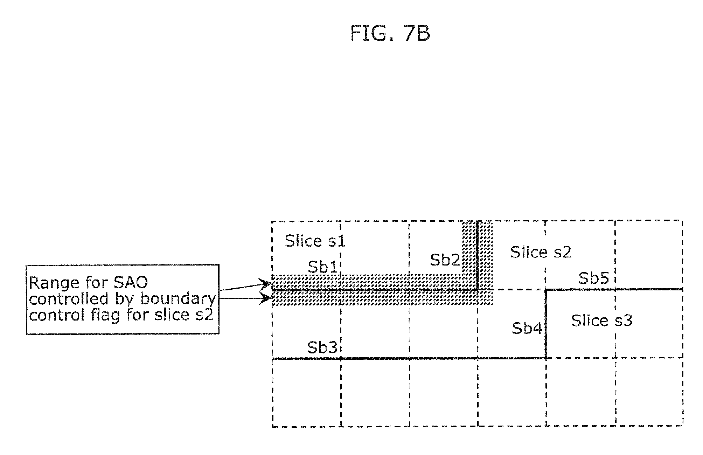

As FIG. 7B shows, the slice boundaries designated as candidates for SAO controlled by the boundary control flag according to this embodiment are the same slice boundaries designated as candidates for deblocking filter operation. In other words, the slice boundary designated as a candidate for SAO is at least one of the top slice boundary or the left slice boundary among all slice boundaries of the current slice corresponding to the boundary control flag. More specifically, when the current slice is slice s2, based on the boundary control flag for slice s2, SAO is performed only on the top slice boundary sb1 and the left slice boundary sb2 of all slice boundaries sb1 to sb5 of slice s2. It should be noted that when a current slice has a top slice boundary and a left slice boundary, these slice boundaries become candidates for SAO, and when a current slice only has one of these slice boundaries, that one slice boundary becomes a candidate for SAO. Moreover, similar to the deblocking filter operation, SAO is performed jointly on at least one pixel in the current slice that is in the vicinity of the slice boundary and on at least one pixel in a different slice in the vicinity of the slice boundary.

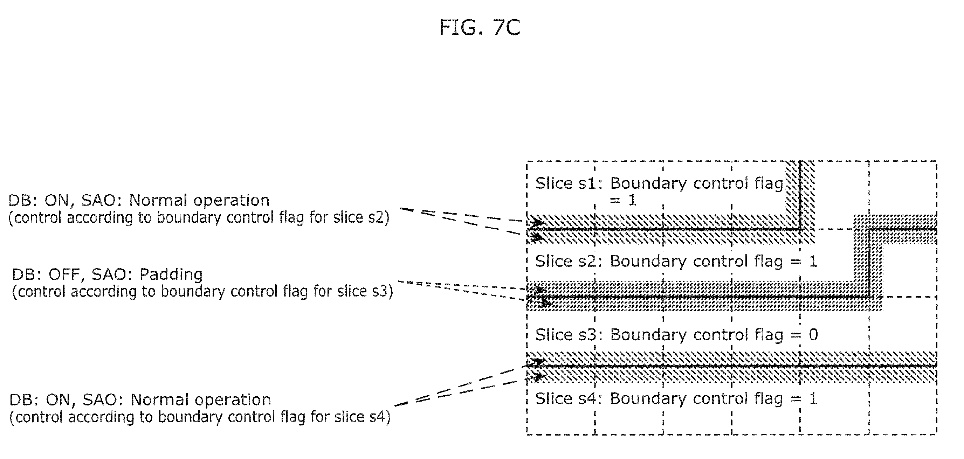

As FIG. 7C shows, the deblocking filter operation and SAO for the vicinity of the slice boundary between slice s1 and slice s2, that is to say, for the pixels in the vicinity of the top and the left slice boundaries of slice s2, are controlled by the boundary control flag for slice s2. For example, when the boundary control flag = 1, the deblocking filter operation performed by the deblocking filter 109 is set ON, and the operation mode of SAO performed by the SAO unit 110 is set to normal operation. In other words, the deblocking filter 109 performs deblocking filter operation and the SAO unit 110 performs SAO according to normal operation on the pixels in slice 2 that are in the vicinity of the top and left slice boundaries of slice s2 and the pixels in slice s1 that are in the vicinity of the top and left slice boundaries of slice s2.

Moreover, the deblocking filter operation and SAO for the vicinity of the slice boundary between slice s2 and slice s3, that is to say, for the pixels in slice s3 and the pixels in slice s2 that are in the vicinity of the top and the left slice boundaries of slice s3, are controlled by the boundary control flag for slice s3. For example, when the boundary control flag = 0, the deblocking filter operation performed by the deblocking filter 109 is set OFF, and the operation mode of SAO performed by the SAO unit 110 is set to padding. In other words, the deblocking filter 109 does not perform deblocking filter operation and the SAO unit 110 performs SAO according to padding on the pixels in slice s3 that are in the vicinity of the top and left slice boundaries of slice s3 and the pixels in slice s2 that are in the vicinity of the top and left slice boundaries of slice s3.

More specifically, the SAO unit 110 performs on padding on pixels in slice s3 and slice s2 that are in the vicinity of the above described boundaries as a result of the edge index being set to 0. It should be noted that since there is a possibility the SAO unit 110 will refer to pixels in slice s3 when performing SAO on pixels in slice s2 that are in the vicinity of the above-described slice boundaries, the SAO unit 110 will perform SAO according to padding on those pixels in slice s2. Moreover, similar to the pixels in slice s2, since there is a possibility the SAO unit 110 will refer to pixels in slice s2 when performing SAO on pixels in slice s3 that are in the vicinity of the above-described slice boundaries, the SAO unit 110 will perform SAO according to padding on those pixels in slice s3.

In this way, in this embodiment, similar to the slice boundary designated as a candidate for deblocking filter operation, the SAO unit 110 performs SAO only on the top and left slice boundaries among the slice boundaries for a current slice, in accordance with the boundary control flag for the current slice. As a result, it is possible for the image coding apparatus 100 to perform coding involving GDR without the need to modify the slice header after the image coding apparatus 100 codes all LCUs included in the slice.

Furthermore, since loop filter operation switching is not performed for the slice boundary between slice s1 and slice s2 and the slice boundary between slice s3 and slice s4, it is possible to improve image quality at these slice boundaries.

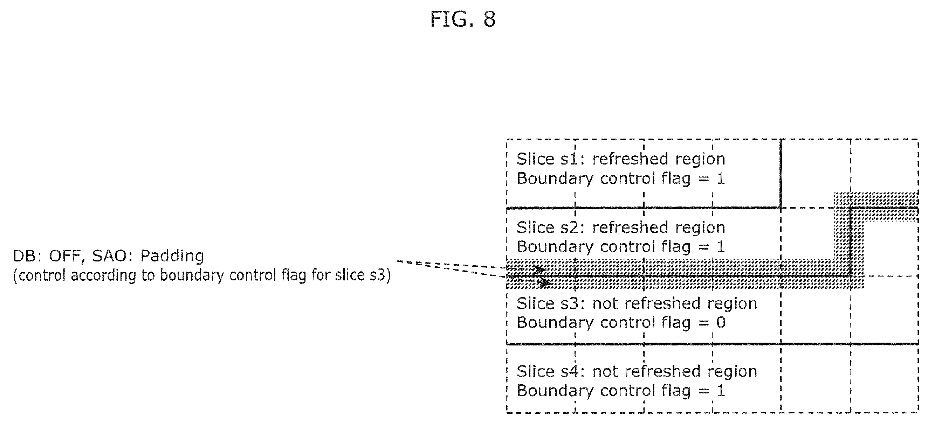

FIG. 8 is for illustrating the boundary control according to this embodiment in further detail.

For example, as FIG. 8 shows, as a result of GDR, slice s1 and slice s2 are each refreshed regions, and slice s3 and slice s4 are each not refreshed regions.

In this case, in this embodiment, by simply setting the boundary control flag for slice s3 to 0, it is possible to avoid the occurrence of data dependency between the refreshed region and the not refreshed region, even if the boundary control flags for the other three slices are set to 1.

As a result, there is no need to make the loop filter operation not functional so that the deblocking filter operation is set OFF and SAO is set to padding for the slice boundary between slice s1 and slice s2 and the slice boundary between slice s3 and slice s4.

In this way, according to this embodiment, the boundary control flag for a current slice is used to jointly control the deblocking filter operation and SAO for only the top slice boundary and left slice boundary among the slice boundaries of the current slice.

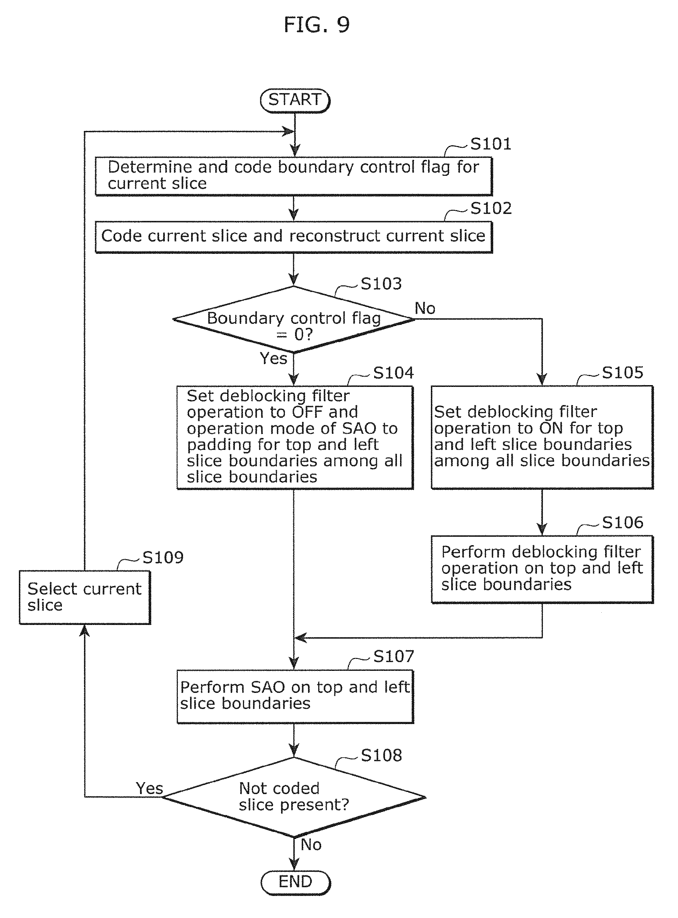

FIG. 9 is a flow chart illustrating a processing operation of the image coding apparatus 100 according to this embodiment.

First, the boundary control unit 111 of the image coding apparatus 100 determines the boundary control flag for the current slice, and the entropy coding unit 104 entropy codes the boundary control flag (step S101). Next, the image coding apparatus 100 codes the current slice and generates a reconstructed image for the current slice from the data generated as a result of the coding of the current slice (step S102). Next, the boundary control unit 111 determines whether the boundary control flag determined in step S101 is 0 or not (step S103). Here, when the boundary control unit 111 determines that the boundary control flag is 0 (Yes in step S103), the boundary control unit 111 controls the deblocking filter 109 to set the deblocking filter operation for the top and left slice boundaries of the current slice to OFF. Furthermore, the boundary control unit 111 controls the SAO unit 110 to set the operation mode of SAO for these slice boundaries to padding (step S104). On the other hand, when the boundary control unit 111 determines that the boundary control flag is 1 (No in step S103), the boundary control unit 111 controls the deblocking filter 109 to set the deblocking filter operation for the above-described top and left slice boundaries to ON (step S105). Then, the deblocking filter 109 performs the deblocking filter operation on the above-described top and left slice boundaries (step S106).

Next, after the processing in step S104 and step S106 is complete, the SAO unit 110 performs SAO on the above-described top and left slice boundaries (step S107). It should be noted that at this time, when the operation mode of SAO in step S104 is set to padding, SAO is performed in accordance with this padding.

The image coding apparatus 100 then determines whether there is a slice which has not been coded in the current picture (step S108). Here, if the image coding apparatus 100 determines that there is a slice which has not been coded (Yes in step S108), the image coding apparatus 100 selects that uncoded slice as a new current slice (step S109), and repeats the processing from step S101.

It should be noted that the loop filter operation is controlled only for the above-described top and left slice boundaries among all slice boundaries of the current slice. Moreover, if one of the top and left slice boundaries is not present, the loop filter operation is controlled for only the one of the slice boundaries. Furthermore, for slice boundaries designated as candidates for loop filter operation, the loop filter operation is performed on pixels in the vicinity of, and on both sides of, the slice boundaries.

In this way, with the image coding method according to this embodiment, the slice boundary designated as a candidate for sample adaptive offset operation (SAO) controlled by the boundary control flag (slice_loop_filter_across_slices_enabled_flag) for the current slice is, just like with the deblocking filter operation, limited to only at least one of the top or bottom slice boundaries among all the slice boundaries of the reconstructed current slice. Moreover, the sample adaptive offset operation (SAO) controlled by the boundary control flag for the current slice is, just like with the deblocking filter operation, performed jointly on not only pixels in the reconstructed current slice that are in the vicinity of at least one of the top or bottom slice boundaries of the reconstructed current slice, but on pixels in a different reconstructed slice that are in the vicinity of at least one of the top or bottom slice boundaries of the reconstructed current slice as well.

As such, even if the boundary control flag for the current slice indicates 1, if the boundary control flag for the next slice indicates 0, without waiting for the reconstruction of the next slice, loop filter operation (deblocking filter operation and SAO) can be performed on the reconstructed current slice, and the reconstructed current slice can be used in the generation of a prediction image. This makes it possible to reduce the processing load.

Moreover, the loop filter operation for slice boundaries (bottom slice boundary and right slice boundary of the current slice) between the reconstructed current slice and the reconstructed next slice is not controlled by the boundary control flag for the current slice. As such, when image coding involving GDR is performed, there is no need to modify the boundary control flag coded before the current slice after the current slice has been coded, even if it is known that the next slice is a not refreshed region. This makes it possible to reduce the processing load.

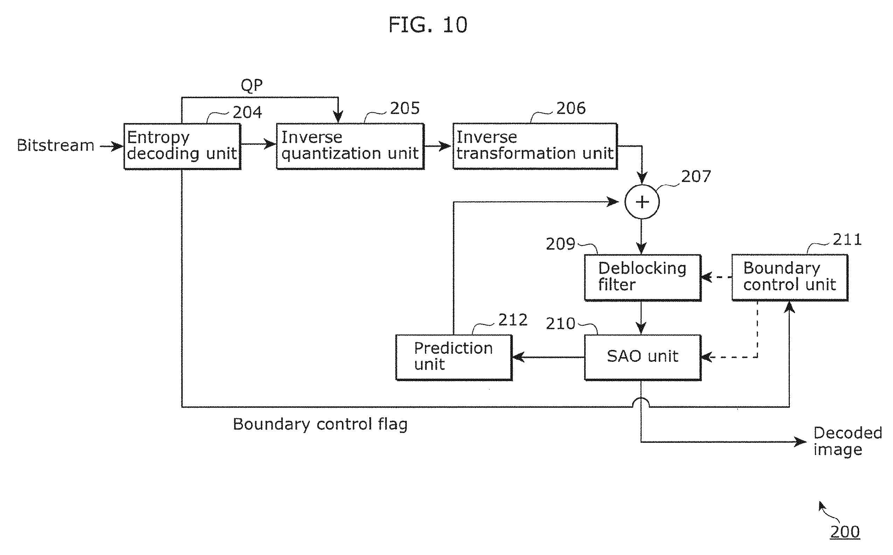

FIG. 10 is a block diagram illustrating the configuration of the image decoding apparatus according to this embodiment.

The image decoding apparatus 200 includes an entropy decoding unit 204, an inverse quantization unit 205, an inverse transformation unit 206, an adder 207, a deblocking filter 209, a SAO unit 210, a boundary control unit 211 and a prediction unit 212.

The entropy decoding unit 204 obtains a bitstream showing a coded moving picture, and entropy decodes the bitstream. As a result, the entropy decoding unit 204 outputs a quantization block including at least one quantization value, a quantization parameter (QP), and a boundary control flag.

The inverse quantization unit 205 obtains the quantization parameter and quantization block output by the entropy decoding unit 204, and restores a coefficient block including at least one frequency coefficient by inverse quantizing the quantization block using the quantization parameter.

The inverse transformation unit 206 generates a decoded differential image by performing an inverse orthogonal transformation, such as inverse discrete cosine transformation, on the coefficient block restored by the inverse quantization unit 205.

The adder 207 generates a reconstructed image by adding the decoded differential image and the prediction image generated by the prediction unit 212. The current slice (current slice to be decoded) included in the coded picture in the bitstream is decoded as a result of this sequential generation of the reconstructed image.

The deblocking filter 209 obtains at least one reconstructed image from the adder 207, and performs the deblocking filter operation on a given boundary of the at least one reconstructed image. Here, the deblocking filter 209 performs the deblocking filter operation on a given slice boundary of the current slice by in accordance with control by the boundary control unit 211.

When the SAO unit 210 obtains at least one reconstructed image from the deblocking filter 209, the SAO unit 110 performs SAO on the obtained at least one reconstructed image. Here, the SAO unit 110 performs SAO on a given slice boundary of the current slice made up of these reconstructed images in accordance with control by the boundary control unit 211.

The prediction unit 212 generates a prediction image of the current block using the current slice on which SAO has been performed, and outputs the prediction image to the adder 207.

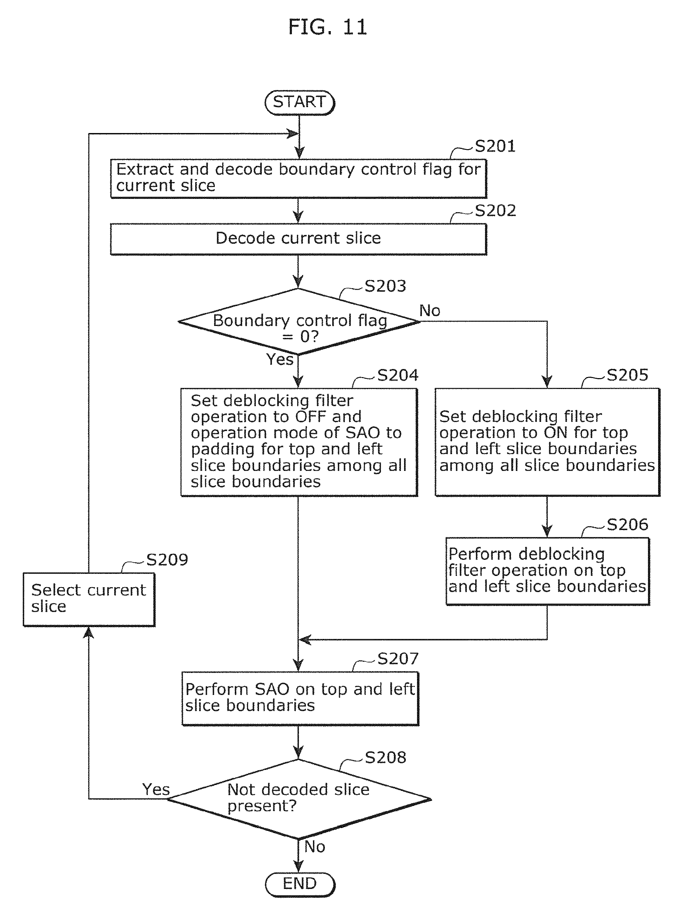

FIG. 11 is a flow chart illustrating a processing operation of the image decoding apparatus 200 according to this embodiment.

First, the entropy decoding unit 204 of the image decoding apparatus 200 extracts, from the bit stream, the boundary control flag for the current slice (current slice to be decoded), and entropy decodes the boundary control flag (step S201). Next, the image decoding apparatus 200 decodes the current slice (step S202). Next, the boundary control unit 211 determines whether the boundary control flag entropy decoded in step S201 is 0 or not (step S203). Here, when the boundary control unit 211 determines that the boundary control flag is 0 (Yes in step S203), the boundary control unit 211 controls the deblocking filter 209 to set the deblocking filter operation for the top and left slice boundaries of the current slice to OFF. Furthermore, the boundary control unit 211 controls the SAO unit 210 to set the operation mode of SAO for these slice boundaries to padding (step S204). On the other hand, when the boundary control unit 211 determines that the boundary control flag is 1 (No in step S203), the boundary control unit 211 controls the deblocking filter 209 to set the deblocking filter operation for the above-described top and left slice boundaries to ON (step S205). Then, the deblocking filter 209 performs the deblocking filter operation on the above-described top and left slice boundaries (step S206).

Next, after the processing in step S204 and step S206 is complete, the SAO unit 210 performs SAO on the above-described top and left slice boundaries (step S207). It should be noted that at this time, when the operation mode of SAO in step S204 is set to padding, SAO is performed in accordance with this padding.

The image decoding apparatus 200 then determines whether there is a slice which has not been decoded in the current picture (step S208). Here, if the image decoding apparatus 200 determines that there is a slice which has not been decoded (Yes in step S208), the image decoding apparatus 200 selects that undecoded slice as a new current slice (step S209), and repeats the processing from step S201.

It should be noted that the loop filter operation is controlled only for the above-described top and left slice boundaries among all slice boundaries of the current slice. Moreover, if one of the top and left slice boundaries is not present, the loop filter operation is controlled for only the one of the slice boundaries. Furthermore, for slice boundaries designated as candidates for loop filter operation, the loop filter operation is performed on pixels in the vicinity of, and on both sides of, the slice boundaries.

In this way, the image decoding method and image decoding apparatus 200 according to this embodiment, similar to the above-described image coding method and image coding apparatus 100, control the loop filter operation for the slice boundaries of a current slice based on the boundary control flag. In other words, the image decoding method and image decoding apparatus 200 according to this embodiment, perform deblocking filter operation and SAO on slice boundaries of the current slice in accordance with the processing operations illustrated using FIG. 7A through FIG. 8. It should be noted that the current slice used in the image decoding method and image decoding apparatus 200 is a current slice to be decoded, and the current slice in the image coding method and image coding apparatus 100 is a current slice to be coded.

In other words, with the image decoding method according to this embodiment, the slice boundary designated as a candidate for sample adaptive offset operation (SAO) controlled by the boundary control flag (slice_loop_filter_across_slices_enabled_flag) for the current slice is, just like with the deblocking filter operation, limited to only at least one of the top or bottom slice boundaries among all the slice boundaries of the current slice. Moreover, the sample adaptive offset operation (SAO) controlled by the boundary control flag for the current slice is, just like with the deblocking filter operation, performed jointly on not only pixels in the current slice that are in the vicinity of at least one of the top or bottom slice boundaries of the current slice, but on pixels in a different slice that are in the vicinity of at least one of the top or bottom slice boundaries of the current slice as well.

As such, even if the boundary control flag for the current slice indicates 1, if the boundary control flag for the next slice indicates 0, loop filter operation (deblocking filter operation and SAO) can be performed on the current slice and the current slice can be output or displayed without having to wait for the next slice to be coded. This makes it possible to reduce the processing load.

Furthermore, in this embodiment, when the boundary control flag is 0, the padding mode makes it possible to cause the sample adaptive offset operation to not actually function. As a result, since sample adaptive offset operation is not actually performed on at least one of the top slice boundary or the left slice boundary of the current slice, that is to say, on pixels in the vicinity of at least one of the top slice boundary or the left slice boundary of the current slice, it is possible to suppress data dependency between (i) a different slice opposite the at least one of the top or left slice boundaries of the current slice and (ii) the current slice. With this, it is possible to easily perform the multi-slice operation performed in parallel with the processing of a plurality of slices.

Furthermore, in this embodiment, when the boundary control flag is 0, it is possible to cause the deblocking filter operation to not function by switching the deblocking filter operation to OFF. As a result, since the deblocking filter operation is not performed on at least one of the top slice boundary or the left slice boundary of the current slice, it is possible to suppress data dependency between (i) a different slice opposite the at least one of the top or left slice boundaries of the current slice and (ii) the current slice. With this, it is possible to easily perform the multi-slice operation performed in parallel with the processing of a plurality of slices.

### (Variation 1)

With the image coding method and image decoding method according to the above embodiment, the operation mode of SAO is switched between normal operation and padding in accordance with the boundary control flag, but similar to the deblocking filter operation, SAO may be switched ON and OFF.

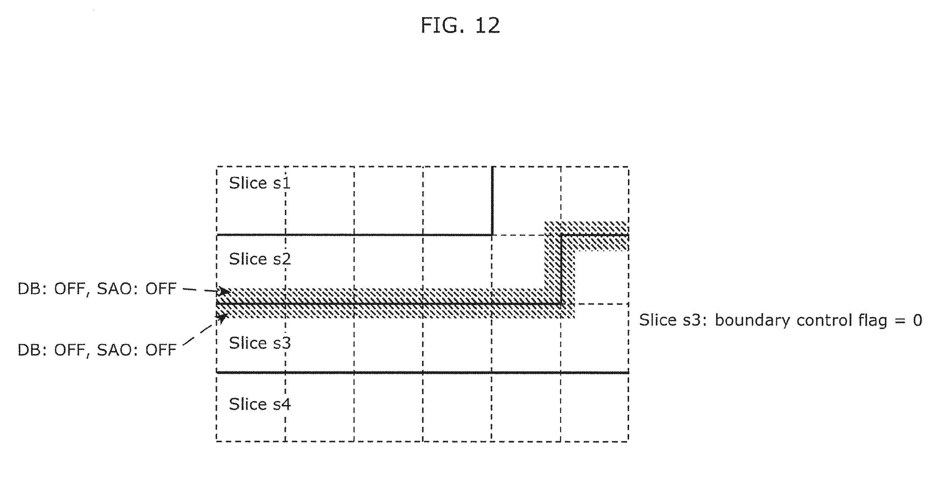

FIG. 12 is for illustrating the control of SAO on slice boundaries according to this variation.

As FIG. 12 shows, SAO for the vicinity of the slice boundary between slice s2 and slice s3, that is to say, for the pixels in the vicinity of the top and the left slice boundaries of slice s3, is switched between ON and OFF by the boundary control flag for slice s3, similar to the deblocking filter operation.

For example, when boundary control flag = 0, in this variation, the deblocking filter operation is set to OFF just like in the above-described Embodiment 1, and SAO is also set to OFF. In other words, the deblocking filter 109 and 209 do not perform the deblocking filter operation and the SAO unit 110 and 210 do not perform SAO on the pixels in slice s3 that are in the vicinity of the top and left slice boundaries of slice s3 and the pixels in slice s2 that are in the vicinity of the top and left slice boundaries of slice s3.

In other words, since there is a possibility the SAO unit 110 and 210 will refer to pixels in slice s3 when performing SAO on pixels in slice s2 that are in the vicinity of the above-described slice boundaries, the SAO unit 110 and 210 will not perform SAO on pixels in slice s2. Moreover, similar to the pixels in slice s2, since there is a possibility the SAO unit 110 and 210 will refer to pixels in slice s2 when performing SAO on pixels in slice s3 that are in the vicinity of the above-described slice boundaries, the SAO unit 110 will not perform SAO on pixels in slice s3.

With this variation, it is possible to achieve the same advantageous effects as the above Embodiment 1 by switching SAO between ON and OFF.

### (Variation 2)

In the image coding method and image decoding method according to the above-described embodiment, there are times when a single pixel becomes a candidate for loop filter operation dependent on a plurality of boundary control flags. In this case, a characteristic of this variation is that it is possible to adequately perform loop filter operation on that pixel.

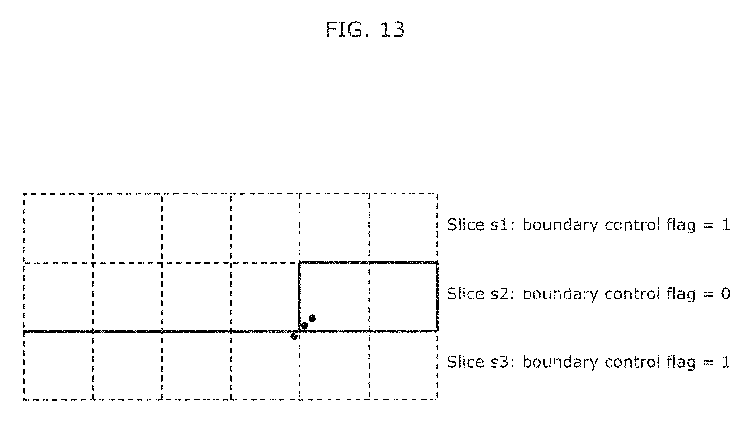

FIG. 13 shows an example of a mask for SAO in a corner area of a slice.

With the boundary control flag in the above-described embodiment, there are times when it is uncertain how to perform SAO on pixels in a corner area of a slice. The pixel subject to SAO is the pixel in the middle of three pixels (three black dots shown in FIG. 13) included in the mask shown in FIG. 13. SAO performed on this pixel is controlled concurrently by the boundary control flags for slice s2 and slice s3.

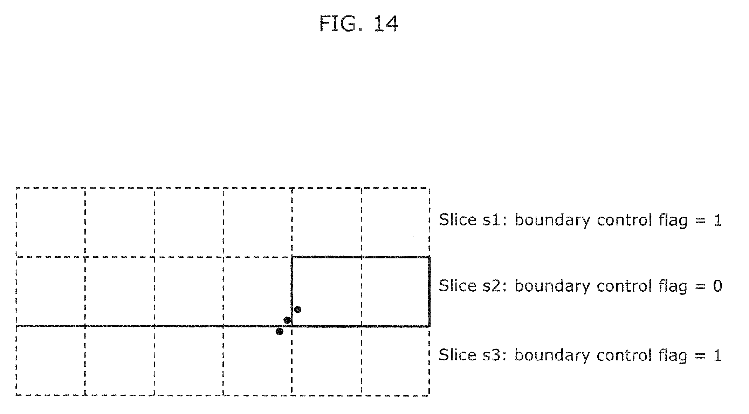

FIG. 14 shows a different example of a mask for SAO in a corner area of a slice.

The pixel subject to SAO is the pixel in the middle of three pixels included in the mask shown in FIG. 14. Similar to the example shown in FIG. 13, SAO performed on this pixel is controlled concurrently by the boundary control flags for slice s2 and slice s3.

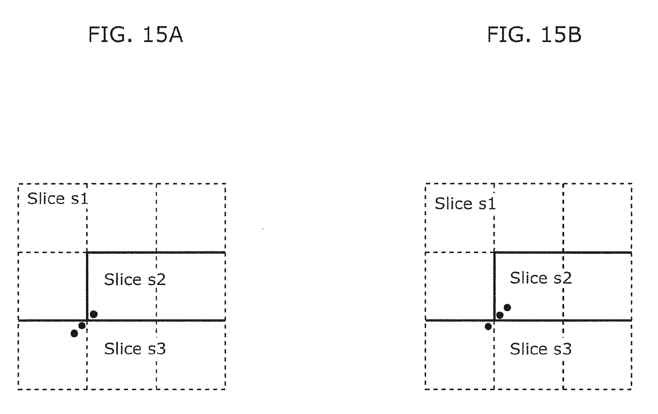

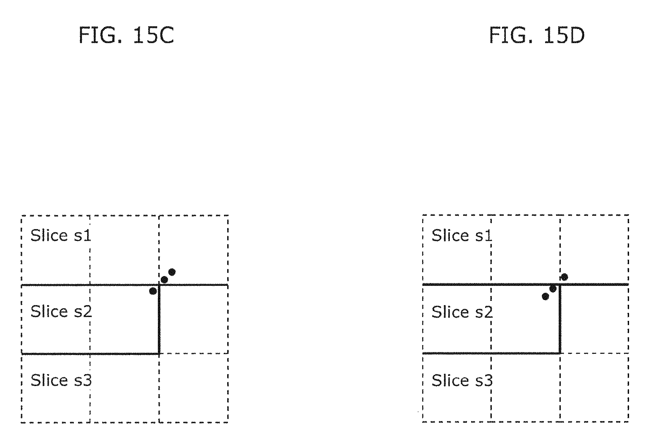

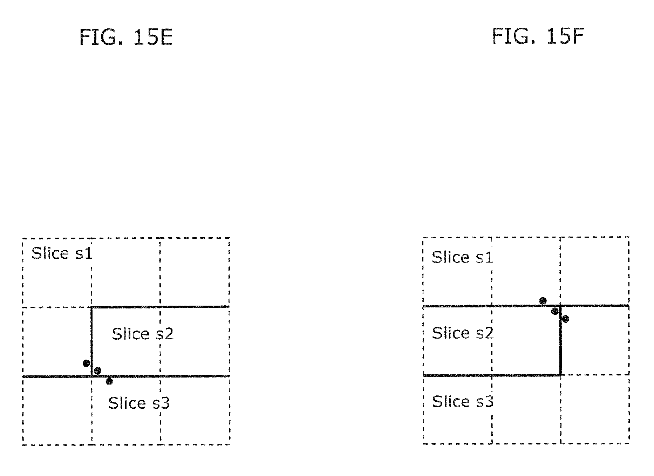

FIG. 15A through FIG. 15F show yet a different example of a mask for SAO in a corner area of a slice.

Even in these examples shown in FIG. 15A through FIG. 15F, similar to the above-described examples, it is uncertain which slice's (slice s2 or slice s3) boundary control flag SAO performed on the middle pixel is to be controlled by. In this example as well, the control must be performed adequately.

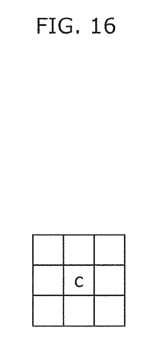

FIG. 16 shows the positional relationship between a middle pixel subject to SAO and surrounding pixels. In this variation, rule 1 and rule 2 are used.

With rule 1, when the following first through third conditions are met, edge index is set to 0 for the SAO performed on the middle pixel. The first condition is that the middle pixel is in the current slice (slice s1) and a pixel in a different slice (slice s2) is required for SAO for the middle pixel. The second condition is that the pixel in the different slice (slice s2) is a pixel to the right, top, bottom, top-right, or bottom-left of the middle pixel. The third condition is that the boundary control flag for the different slice (slice s2) is 0.

With rule 2, when the following first through third conditions are met, edge index is set to 0 for the SAO performed on the middle pixel. The first condition is that the middle pixel is in the current slice (slice s1) and a pixel in a different slice (slice s2) is required for SAO for the middle pixel. The second condition is that the pixel in the different slice (slice s2) is a pixel to the left, top, top-left, top-right, or bottom-left of the middle pixel. The third condition is that the boundary control flag for the current slice (slice s1) is 0.

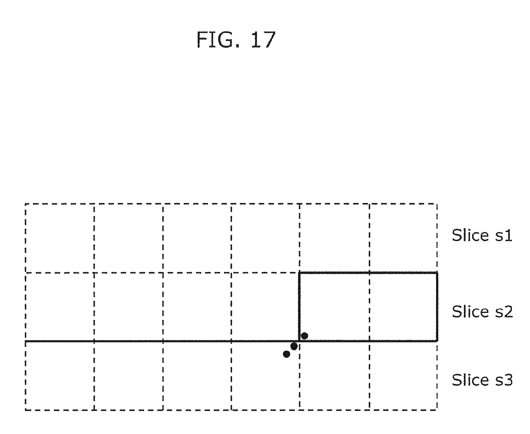

FIG. 17 shows an example of a 45° SAO mask in a corner area of a slice.

SAO is performed on the middle of the three pixels shown in FIG. 17 using a 45° mask. In this case, the middle pixel is in the current slice (slice s3) and a pixel in a different slice s2 is required for SAO for the middle pixel. As such, when either of the boundary control flags for slice s2 and slice s3 indicates 0, edge index is set to 0 for SAO performed on the middle pixel.

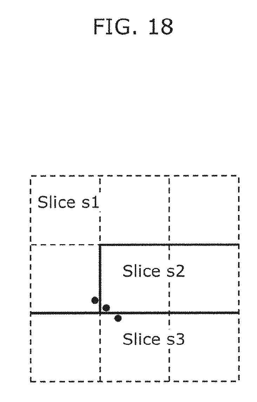

FIG. 18 shows an example of a 135° SAO mask in a corner area of a slice.

SAO is performed on the middle of the three pixels shown in FIG. 18 using a 135° mask. In this case, the middle pixel is in the current slice (slice s2) and a pixel in a different slice s1 and a pixel in slice s3 are required for SAO for the middle pixel. As such, when either of the boundary control flags for slice s2 and slice s3 indicates 0, edge index is set to 0 for SAO performed on the middle pixel.

In this way, in this variation, padding has priority in the corner areas of slices. With this, since there is no need to perform padding on all slice boundaries of a slice for one pixel in the corner area of the slice, it is possible to adequately perform loop filter operation on pixels in the vicinity of the slice boundaries.

In other words, in this variation, a pixel designated as a candidate for SAO dependent on a boundary control flag is a specific pixel also designated as a candidate for SAO dependent on another boundary control flag for a different slice, and when at least one of the boundary control flag or the other boundary control flag indicates 0, the SAO operation mode switches to padding. Then, in accordance with padding, SAO is performed on the specific pixel. With this, when a plurality of boundary control flags for one pixel (the specific pixel) are competing for control of SAO, a boundary control flag indicating 0 among those boundary control flags has priority. As a result, it is possible to adequately perform SAO on the specific pixel.

Although the image decoding method and image coding method according to one or more aspect have been described above based on an exemplary embodiment and variations thereof, the present invention is not limited to thereto. Those skilled in the art will readily appreciate that various modifications may be made in these exemplary embodiments and that other embodiments may be obtained by arbitrarily combining the structural elements of the embodiments without materially departing from the novel teachings and advantages of the subject matter recited in the appended Claims. Moreover, the image decoding method and image decoding apparatus according to an aspect of the present invention or another aspect may be realized as the following.

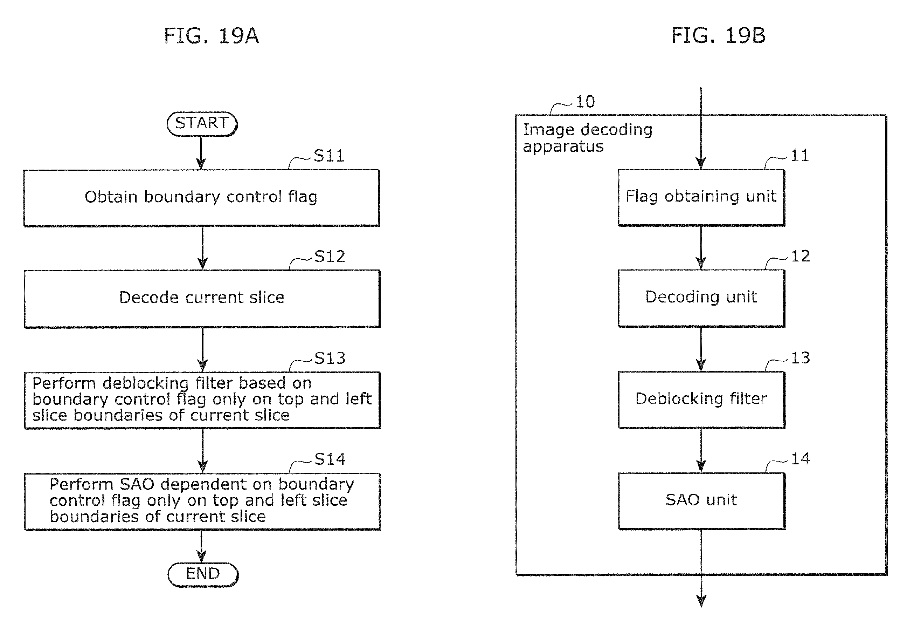

FIG. 19A is a flow chart illustrating an image decoding method according to an aspect of the present invention.

An image decoding method which decodes a coded picture includes the following steps S11 through S14. In step S11, a boundary control flag is obtained for jointly controlling a deblocking filter operation and a sample adaptive offset operation for a slice boundary of a current slice to be decoded included in a coded picture. Next, in step S12, the current slice is decoded. Next, in step S13, the deblocking filter operation is performed based on the boundary control flag only on at least one of a top slice boundary or a left slice boundary among all slice boundaries of the current slice that has been decoded. Then, in step S14, the sample adaptive offset operation dependent on the boundary control flag is performed only on at least one of the top slice boundary or the left slice boundary among all the slice boundaries of the current slice that has been decoded.

FIG. 19B is a block diagram illustrating the configuration of an image decoding apparatus according to an aspect of the present invention.

An image decoding apparatus 10 which decodes a coded picture includes a flag obtaining unit 11, a decoding unit 12, a deblocking filter 13, and a SAO unit 14. The flag obtaining unit 11 obtains a boundary control flag for jointly controlling a deblocking filter operation and a sample adaptive offset operation for a slice boundary of a current slice to be decoded included in a coded picture. Next, the decoding unit 12 decodes the current slice. Next, the deblocking filter 13 performs the deblocking filter operation based on the boundary control flag only on at least one of a top slice boundary or a left slice boundary among all slice boundaries of the current slice that has been decoded. Then, the SAO unit 14 performs the sample adaptive offset operation dependent on the boundary control flag only on at least one of the top slice boundary or the left slice boundary among all the slice boundaries of the current slice that has been decoded.

This kind of image decoding method and image decoding apparatus according to an aspect of the present invention also realize the same advantageous effects of the above-described embodiment and the variations thereof.

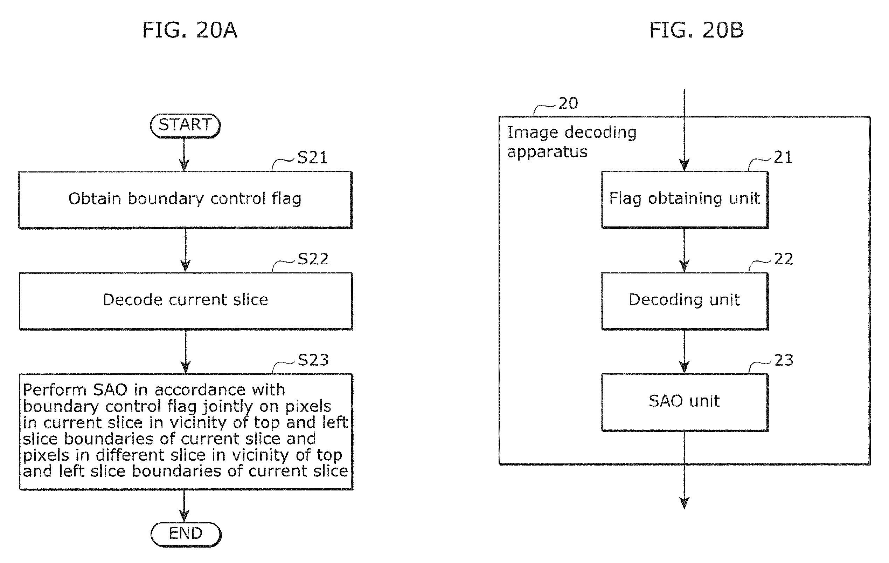

FIG. 20A is a flow chart illustrating an image decoding method according to another aspect of the present invention.

An image decoding method which decodes an encoded picture includes the following steps S21 through S23. In step S21, a boundary control flag is obtained for controlling a sample adaptive offset operation for a slice boundary of a current slice to be decoded included in the coded picture. Next, in step S22, the current slice is decoded. Then, in step S23, the sample adaptive offset operation is performed in accordance with the boundary control flag jointly on at least one pixel in the current slice that has been decoded and on at least one pixel in a different slice that has been decoded, the pixels being in a vicinity of at least one of a top slice boundary or a left slice boundary of the current slice.

FIG. 20B is a block diagram illustrating the configuration of an image decoding apparatus according to another aspect of the present invention.

An image decoding apparatus 20 which decodes a coded picture includes a flag obtaining unit 21, a decoding unit 22, and a SAO unit 23. The flag obtaining unit 21 obtains a boundary control flag for controlling a sample adaptive offset operation for a slice boundary of a current slice to be decoded included in the coded picture. Next, the decoding unit 22 decodes the current slice. Then, the SAO unit 23 performs the sample adaptive offset operation in accordance with the boundary control flag jointly on at least one pixel in the current slice that has been decoded and on at least one pixel in a different slice that has been decoded, the pixels being in a vicinity of at least one of a top slice boundary or a left slice boundary of the current slice.

This kind of image decoding method and image decoding apparatus according to another aspect of the present invention also realize the same advantageous effects of the above-described embodiment and the variations thereof.

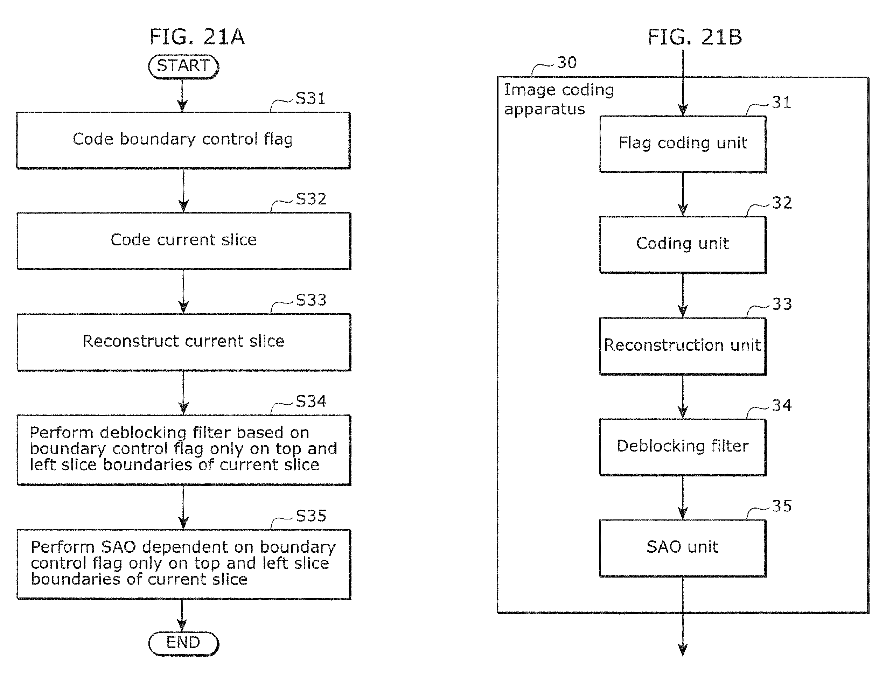

FIG. 21A is a flow chart illustrating an image coding method according to an aspect of the present invention.

An image coding method which codes a picture includes the following steps S31 through S35. In step S31, a boundary control flag is coded for jointly controlling a deblocking filter operation and a sample adaptive offset operation for a slice boundary of a current slice to be coded included in the picture. Next, in step S32, the current slice is coded. Next, in step S33, the current slice is reconstructed from data generated by the coding of the current slice. Next, in step S34, the deblocking filter operation based on the boundary control flag is performed only on at least one of a top slice boundary or a left slice boundary among all slice boundaries of the current slice that has been reconstructed. Then, in step S35, the sample adaptive offset operation dependent on the boundary control flag is performed only on at least one of the top slice boundary or the left slice boundary among all the slice boundaries of the current slice that has been reconstructed.

FIG. 21B is a block diagram illustrating the configuration of an image coding apparatus according to an aspect of the present invention.

An image coding apparatus 30 which codes a picture includes a flag coding unit 31, a coding unit 32, a reconstruction unit 33, a deblocking filter 34, and a SAO unit 35. In other words, the flag coding unit 31 codes a boundary control flag for jointly controlling a deblocking filter operation and a sample adaptive offset operation for a slice boundary of a current slice to be coded included in the picture. Next, the coding unit 32 codes the current slice. Next, the reconstruction unit 33 reconstructs the current slice from data generated by the coding of the current slice. Next, the deblocking filter 34 performs the deblocking filter operation based on the boundary control flag only on at least one of a top slice boundary or a left slice boundary among all slice boundaries of the current slice that has been reconstructed. Then, the SAO unit 35 performs the sample adaptive offset operation dependent on the boundary control flag only on at least one of the top slice boundary or the left slice boundary among all the slice boundaries of the current slice that has been reconstructed.

This kind of image coding method and image coding apparatus according to an aspect of the present invention also realize the same advantageous effects of the above-described embodiment and the variations thereof.

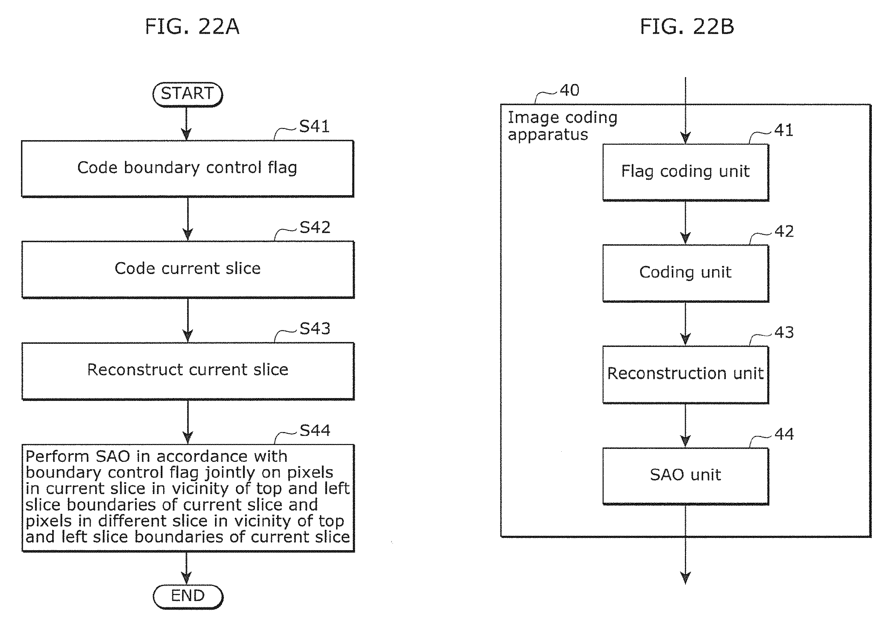

FIG. 22A is a flow chart illustrating an image coding method according to another aspect of the present invention.

An image coding method which codes a picture includes the following steps S41 through S44. In step S41, a boundary control flag is coded for controlling a sample adaptive offset operation for a slice boundary of a current slice to be coded included in the picture. Next, in step S42, the current slice is coded. Next, in step S43, the current slice is reconstructed from data generated by the coding of the current slice. Then, in step S44, the sample adaptive offset operation is performed in accordance with the boundary control flag jointly on at least one pixel in the current slice that has been reconstructed and on at least one pixel in a different slice that has been reconstructed, the pixels being in a vicinity of at least one of a top slice boundary or a left slice boundary of the current slice.

FIG. 22B is a block diagram illustrating the configuration of an image coding apparatus according to another aspect of the present invention.

An image coding apparatus 40 which codes a picture includes a flag coding unit 41, a coding unit 42, a reconstruction unit 43, and a SAO unit 44. In other words, the flag coding unit 41 codes a boundary control flag for controlling a sample adaptive offset operation for a slice boundary of a current slice to be coded included in the picture; Next, the coding unit 42 codes the current slice. Next, the reconstruction unit 43 reconstructs the current slice from data generated by the coding of the current slice. Then, the SAO unit 44 performs the sample adaptive offset operation in accordance with the boundary control flag jointly on at least one pixel in the current slice that has been reconstructed and on at least one pixel in a different slice that has been reconstructed, the pixels being in a vicinity of at least one of a top slice boundary or a left slice boundary of the current slice.

This kind of image coding method and image coding apparatus according to another aspect of the present invention also realize the same advantageous effects of the above-described embodiment and the variations thereof.

Each of the structural elements in each of the above-described embodiments may be configured in the form of an exclusive hardware product, or may be realized by executing a software program suitable for the structural element. Each of the structural elements may be realized by means of a program executing unit, such as a CPU and a processor, reading and executing the software program recorded on a recording medium such as a hard disk or a semiconductor memory. In other words, the image coding apparatus and the image decoding apparatus include processing circuitry and storage which is electrically connected to the processing circuitry (storage which is accessible from the processing circuitry). The processing circuitry includes at least one of the exclusive hardware product or the program executing unit. In addition, when the processing circuitry includes the program executing unit, the storage stores a software program that is executed by the program executing unit. Here, software that accomplishes the image decoding apparatus according to the above-described embodiment is a program which causes a computer to execute the steps shown in FIG. 19A or FIG. 20A. Moreover, software that accomplishes the image coding apparatus according to the above-described embodiment is a program which causes a computer to execute the steps shown in FIG. 21A or FIG. 22A.

It should be noted that in the above embodiment and variations thereof, loop filter operation is performed on a slice boundary which is a boundary between the current slice and another slice, but this slice boundary is not intended to be limiting, and loop filter operation may be performed on any boundary that is a boundary of the current slice. Moreover, in the above embodiment and variations thereof, the loop filter operation for the slice boundary is controlled based on the boundary control flag, but inside a slice, loop filter operation may be performed as usual.

### (Embodiment 2)

The processing described in each of embodiments can be simply implemented in an independent computer system, by recording, in a recording medium, a program for implementing the configurations of the moving picture coding method (image coding method) and the moving picture decoding method (image decoding method) described in each of embodiments. The recording media may be any recording media as long as the program can be recorded, such as a magnetic disk, an optical disk, a magnetic optical disk, an IC card, and a semiconductor memory.

Hereinafter, the applications to the moving picture coding method (image coding method) and the moving picture decoding method (image decoding method) described in each of embodiments and systems using thereof will be described. The system has a feature of having an image coding and decoding apparatus that includes an image coding apparatus using the image coding method and an image decoding apparatus using the image decoding method. Other configurations in the system can be changed as appropriate depending on the cases.

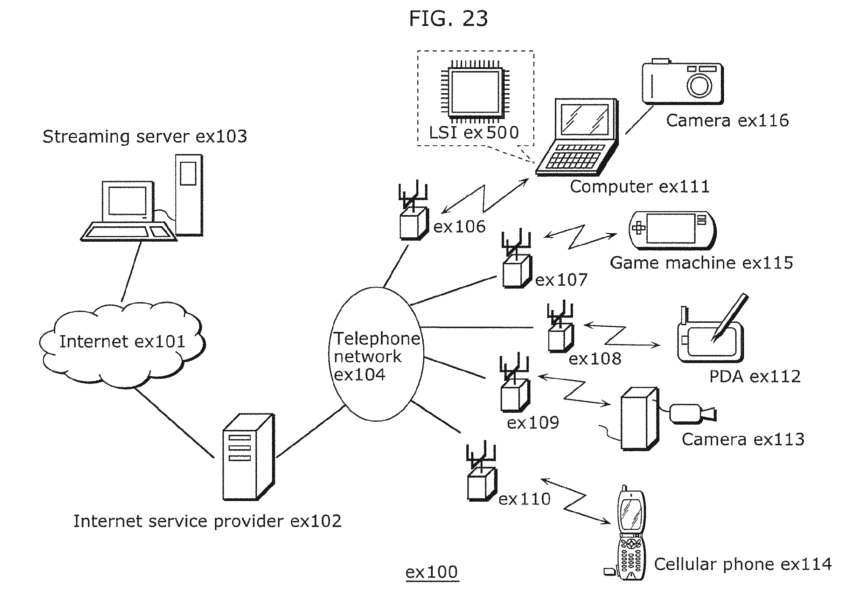

FIG. 23 illustrates an overall configuration of a content providing system ex100 for implementing content distribution services. The area for providing communication services is divided into cells of desired size, and base stations ex106, ex107, ex108, ex109, and ex110 which are fixed wireless stations are placed in each of the cells.

The content providing system ex100 is connected to devices, such as a computer ex111, a personal digital assistant (PDA) ex112, a camera ex113, a cellular phone ex114 and a game machine ex115, via the Internet ex101, an Internet service provider ex102, a telephone network ex104, as well as the base stations ex106 to ex110, respectively.

However, the configuration of the content providing system ex100 is not limited to the configuration shown in FIG. 23, and a combination in which any of the elements are connected is acceptable. In addition, each device may be directly connected to the telephone network ex104, rather than via the base stations ex106 to ex110 which are the fixed wireless stations. Furthermore, the devices may be interconnected to each other via a short distance wireless communication and others.

The camera ex113, such as a digital video camera, is capable of capturing video. A camera ex116, such as a digital camera, is capable of capturing both still images and video. Furthermore, the cellular phone ex114 may be the one that meets any of the standards such as Global System for Mobile Communications (GSM) (registered trademark), Code Division Multiple Access (CDMA), Wideband-Code Division Multiple Access (W-CDMA), Long Term Evolution (LTE), and High Speed Packet Access (HSPA). Alternatively, the cellular phone ex114 may be a Personal Handyphone System (PHS).

In the content providing system ex100, a streaming server ex103 is connected to the camera ex113 and others via the telephone network ex104 and the base station ex109, which enables distribution of images of a live show and others. In such a distribution, a content (for example, video of a music live show) captured by the user using the camera ex113 is coded as described above in each of embodiments (i.e., the camera functions as the image coding apparatus according to an aspect of the present invention), and the coded content is transmitted to the streaming server ex103. On the other hand, the streaming server ex103 carries out stream distribution of the transmitted content data to the clients upon their requests. The clients include the computer ex111, the PDA ex112, the camera ex113, the cellular phone ex114, and the game machine ex115 that are capable of decoding the above-mentioned coded data. Each of the devices that have received the distributed data decodes and reproduces the coded data (i.e., functions as the image decoding apparatus according to an aspect of the present invention).

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and video captured by not only the camera ex113 but also the camera ex116 may be transmitted to the streaming server ex103 through the computer ex111. The coding processes may be performed by the camera ex116, the computer ex111, or the streaming server ex103, or shared among them.

Furthermore, the coding and decoding processes may be performed by an LSI ex500 generally included in each of the computer ex111 and the devices. The LSI ex500 may be configured of a single chip or a plurality of chips. Software for coding and decoding video may be integrated into some type of a recording medium (such as a CD-ROM, a flexible disk, and a hard disk) that is readable by the computer ex111 and others, and the coding and decoding processes may be performed using the software. Furthermore, when the cellular phone ex114 is equipped with a camera, the video data obtained by the camera may be transmitted. The video data is data coded by the LSI ex500 included in the cellular phone ex114.

Furthermore, the streaming server ex103 may be composed of servers and computers, and may decentralize data and process the decentralized data, record, or distribute data.

As described above, the clients may receive and reproduce the coded data in the content providing system ex100. In other words, the clients can receive and decode information transmitted by the user, and reproduce the decoded data in real time in the content providing system ex100, so that the user who does not have any particular right and equipment can implement personal broadcasting.

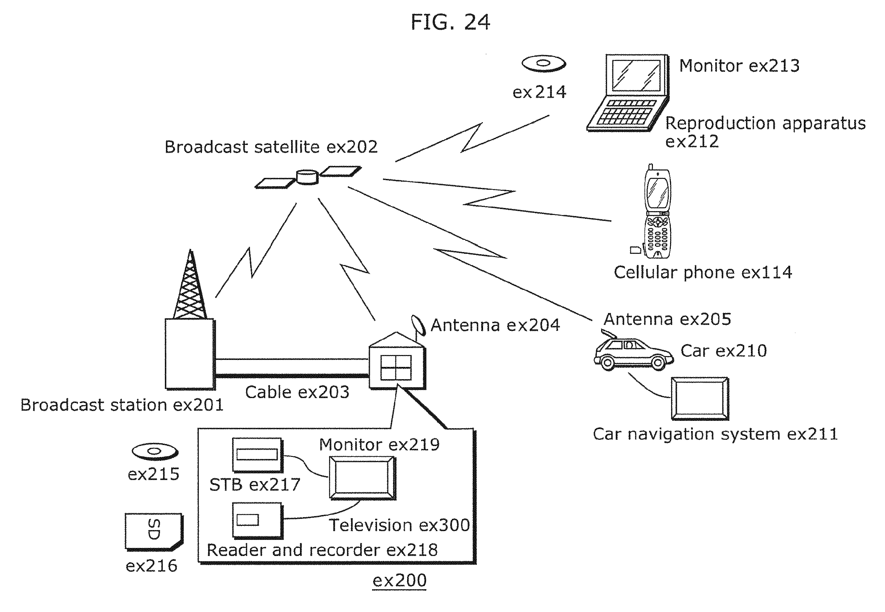

Aside from the example of the content providing system ex100, at least one of the moving picture coding apparatus (image coding apparatus) and the moving picture decoding apparatus (image decoding apparatus) described in each of embodiments may be implemented in a digital broadcasting system ex200 illustrated in FIG. 24. More specifically, a broadcast station ex201 communicates or transmits, via radio waves to a broadcast satellite ex202, multiplexed data obtained by multiplexing audio data and others onto video data. The video data is data coded by the moving picture coding method described in each of embodiments (i.e., data coded by the image coding apparatus according to an aspect of the present invention). Upon receipt of the multiplexed data, the broadcast satellite ex202 transmits radio waves for broadcasting. Then, a home-use antenna ex204 with a satellite broadcast reception function receives the radio waves. Next, a device such as a television (receiver) ex300 and a set top box (STB) ex217 decodes the received multiplexed data, and reproduces the decoded data (i.e., functions as the image decoding apparatus according to an aspect of the present invention).

Furthermore, a reader/recorder ex218 (i) reads and decodes the multiplexed data recorded on a recording medium ex215, such as a DVD and a BD, or (i) codes video signals in the recording medium ex215, and in some cases, writes data obtained by multiplexing an audio signal on the coded data. The reader/recorder ex218 can include the moving picture decoding apparatus or the moving picture coding apparatus as shown in each of embodiments. In this case, the reproduced video signals are displayed on the monitor ex219, and can be reproduced by another device or system using the recording medium ex215 on which the multiplexed data is recorded. It is also possible to implement the moving picture decoding apparatus in the set top box ex217 connected to the cable ex203 for a cable television or to the antenna ex204 for satellite and/or terrestrial broadcasting, so as to display the video signals on the monitor ex219 of the television ex300. The moving picture decoding apparatus may be implemented not in the set top box but in the television ex300.

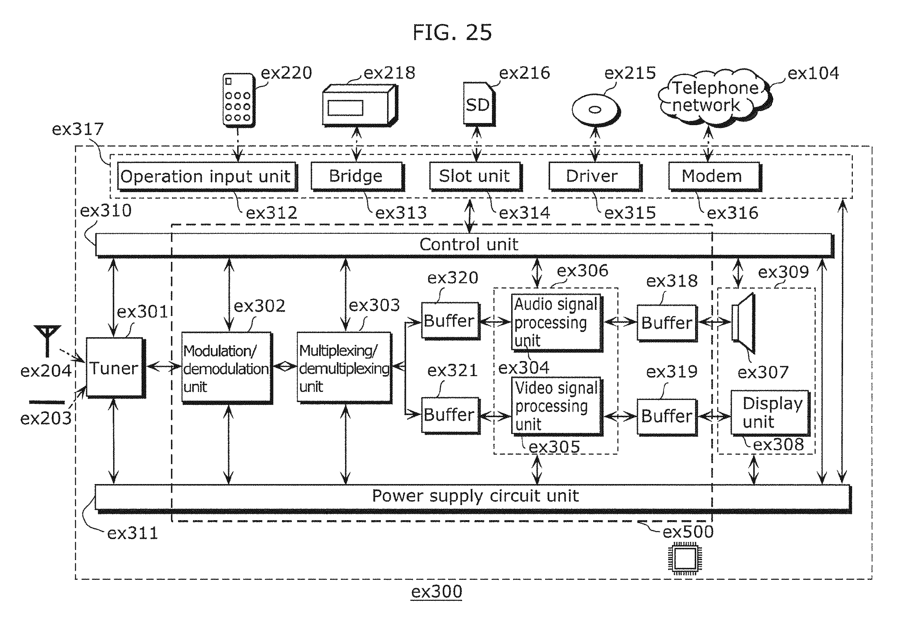

FIG. 25 illustrates the television (receiver) ex300 that uses the moving picture coding method and the moving picture decoding method described in each of embodiments. The television ex300 includes: a tuner ex301 that obtains or provides multiplexed data obtained by multiplexing audio data onto video data, through the antenna ex204 or the cable ex203, etc. that receives a broadcast; a modulation/demodulation unit ex302 that demodulates the received multiplexed data or modulates data into multiplexed data to be supplied outside; and a multiplexing/demultiplexing unit ex303 that demultiplexes the modulated multiplexed data into video data and audio data, or multiplexes video data and audio data coded by a signal processing unit ex306 into data.

The television ex300 further includes: a signal processing unit ex306 including an audio signal processing unit ex304 and a video signal processing unit ex305 that decode audio data and video data and code audio data and video data, respectively (which function as the image coding apparatus and the image decoding apparatus according to the aspects of the present invention); and an output unit ex309 including a speaker ex307 that provides the decoded audio signal, and a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to each other through a synchronous bus.

First, the configuration in which the television ex300 decodes multiplexed data obtained from outside through the antenna ex204 and others and reproduces the decoded data will be described. In the television ex300, upon a user operation through a remote controller ex220 and others, the multiplexing/demultiplexing unit ex303 demultiplexes the multiplexed data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in each of embodiments, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read multiplexed data not through a broadcast and others but from the recording media ex215 and ex216, such as a magnetic disk, an optical disk, and a SD card. Next, a configuration in which the television ex300 codes an audio signal and a video signal, and transmits the data outside or writes the data on a recording medium will be described. In the television ex300, upon a user operation through the remote controller ex220 and others, the audio signal processing unit ex304 codes an audio signal, and the video signal processing unit ex305 codes a video signal, under control of the control unit ex310 using the coding method described in each of embodiments. The multiplexing/demultiplexing unit ex303 multiplexes the coded video signal and audio signal, and provides the resulting signal outside. When the multiplexing/demultiplexing unit ex303 multiplexes the video signal and the audio signal, the signals may be temporarily stored in the buffers ex320 and ex321, and others so that the signals are reproduced in synchronization with each other. Here, the buffers ex318, ex319, ex320, and ex321 may be plural as illustrated, or at least one buffer may be shared in the television ex300. Furthermore, data may be stored in a buffer so that the system overflow and underflow may be avoided between the modulation/demodulation unit ex302 and the multiplexing/demultiplexing unit ex303, for example.

Furthermore, the television ex300 may include a configuration for receiving an AV input from a microphone or a camera other than the configuration for obtaining audio and video data from a broadcast or a recording medium, and may code the obtained data. Although the television ex300 can code, multiplex, and provide outside data in the description, it may be capable of only receiving, decoding, and providing outside data but not the coding, multiplexing, and providing outside data.

Furthermore, when the reader/recorder ex218 reads or writes multiplexed data from or on a recording medium, one of the television ex300 and the reader/recorder ex218 may decode or code the multiplexed data, and the television ex300 and the reader/recorder ex218 may share the decoding or coding.

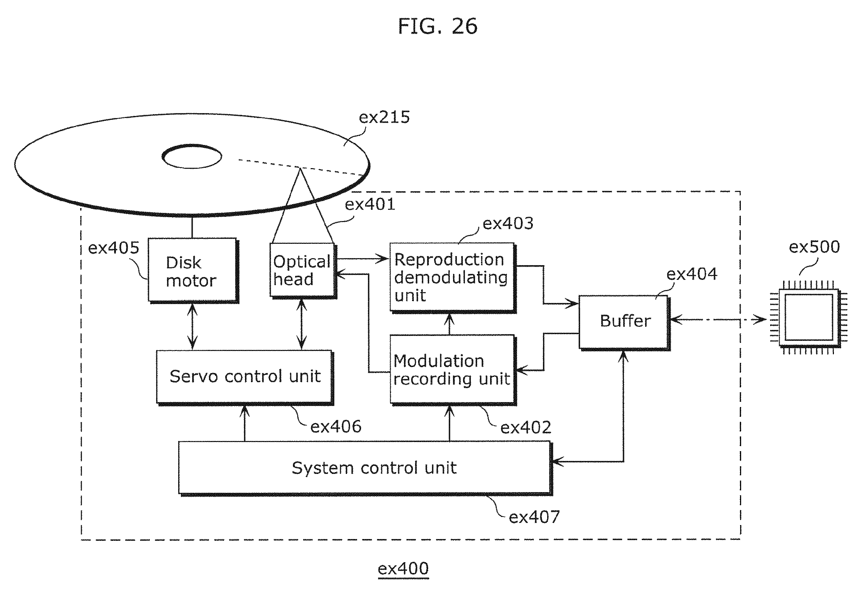

As an example, FIG. 26 illustrates a configuration of an information reproducing/recording unit ex400 when data is read or written from or on an optical disk. The information reproducing/recording unit ex400 includes constituent elements ex401, ex402, ex403, ex404, ex405, ex406, and ex407 to be described hereinafter. The optical head ex401 irradiates a laser spot in a recording surface of the recording medium ex215 that is an optical disk to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. The disk motor ex405 rotates the recording medium ex215. The servo control unit ex406 moves the optical head ex401 to a predetermined information track while controlling the rotation drive of the disk motor ex405 so as to follow the laser spot. The system control unit ex407 controls overall the information reproducing/recording unit ex400. The reading and writing processes can be implemented by the system control unit ex407 using various information stored in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write.

Although the optical head ex401 irradiates a laser spot in the description, it may perform high-density recording using near field light.

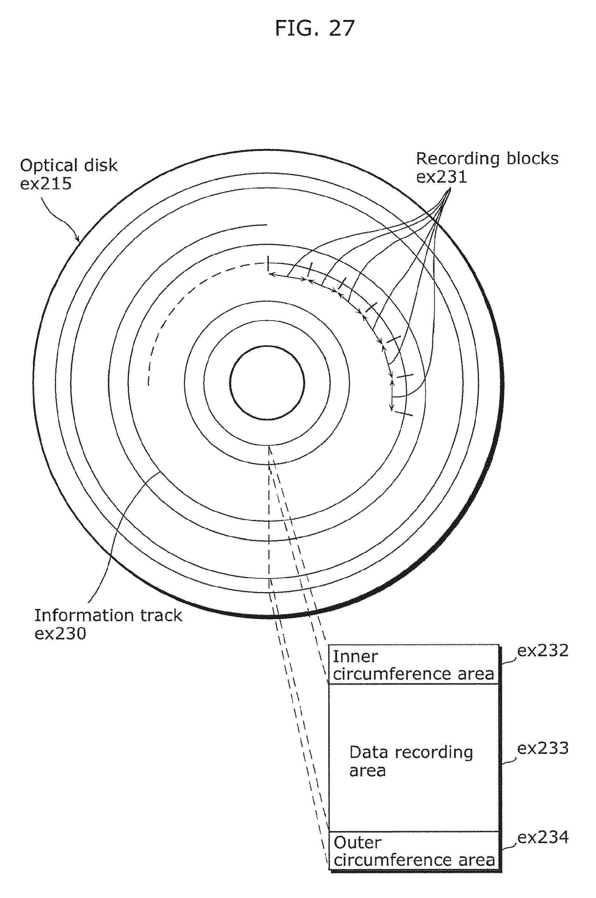

FIG. 27 illustrates the recording medium ex215 that is the optical disk. On the recording surface of the recording medium ex215, guide grooves are spirally formed, and an information track ex230 records, in advance, address information indicating an absolute position on the disk according to change in a shape of the guide grooves. The address information includes information for determining positions of recording blocks ex231 that are a unit for recording data. Reproducing the information track ex230 and reading the address information in an apparatus that records and reproduces data can lead to determination of the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit 400 reads and writes coded audio, coded video data, or multiplexed data obtained by multiplexing the coded audio and video data, from and on the data recording area ex233 of the recording medium ex215.

Although an optical disk having a layer, such as a DVD and a BD is described as an example in the description, the optical disk is not limited to such, and may be an optical disk having a multilayer structure and capable of being recorded on a part other than the surface. Furthermore, the optical disk may have a structure for multidimensional recording/reproduction, such as recording of information using light of colors with different wavelengths in the same portion of the optical disk and for recording information having different layers from various angles.

Furthermore, a car ex210 having an antenna ex205 can receive data from the satellite ex202 and others, and reproduce video on a display device such as a car navigation system ex211 set in the car ex210, in the digital broadcasting system ex200. Here, a configuration of the car navigation system ex211 will be a configuration, for example, including a GPS receiving unit from the configuration illustrated in FIG. 25. The same will be true for the configuration of the computer ex111, the cellular phone ex114, and others.

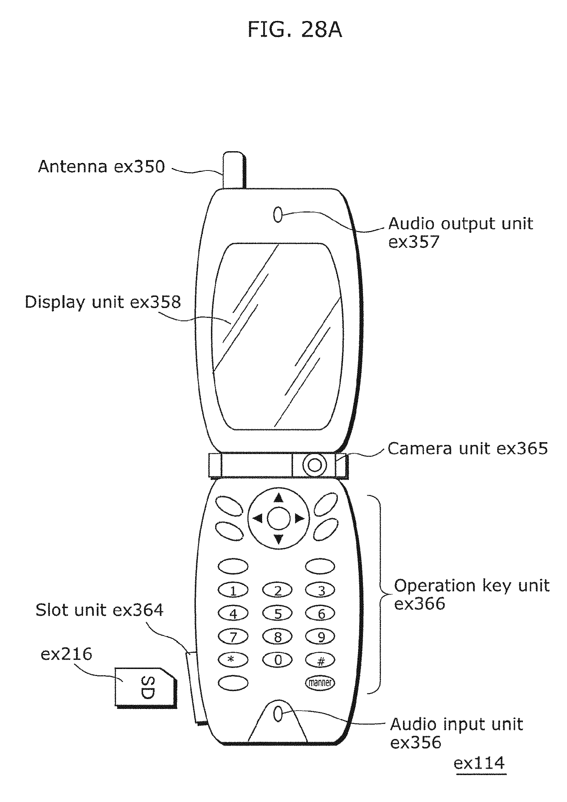

FIG. 28A illustrates the cellular phone ex114 that uses the moving picture coding method and the moving picture decoding method described in embodiments. The cellular phone ex114 includes: an antenna ex350 for transmitting and receiving radio waves through the base station ex110; a camera unit ex365 capable of capturing moving and still images; and a display unit ex358 such as a liquid crystal display for displaying the data such as decoded video captured by the camera unit ex365 or received by the antenna ex350. The cellular phone ex114 further includes: a main body unit including an operation key unit ex366; an audio output unit ex357 such as a speaker for output of audio; an audio input unit ex356 such as a microphone for input of audio; a memory unit ex367 for storing captured video or still pictures, recorded audio, coded or decoded data of the received video, the still pictures, e-mails, or others; and a slot unit ex364 that is an interface unit for a recording medium that stores data in the same manner as the memory unit ex367.

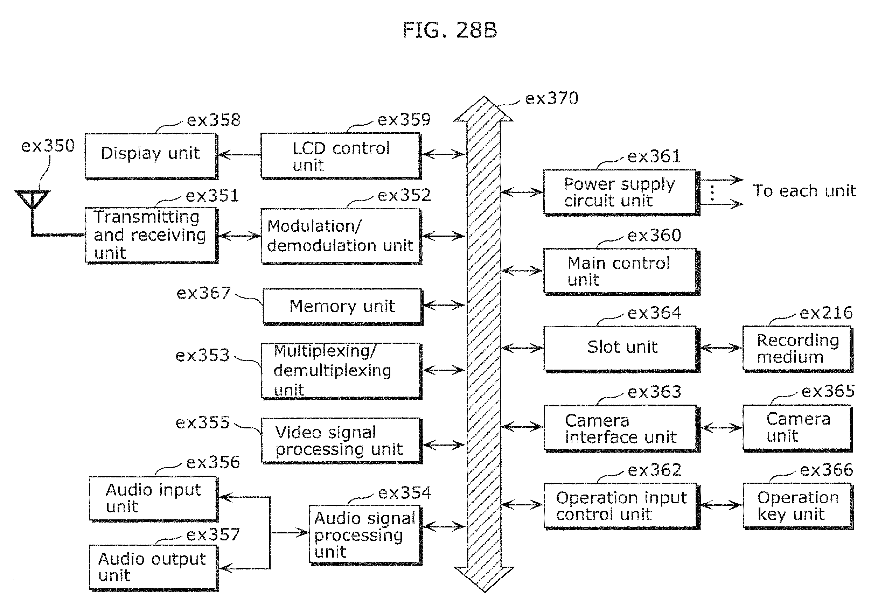

Next, an example of a configuration of the cellular phone ex114 will be described with reference to FIG. 28B. In the cellular phone ex114, a main control unit ex360 designed to control overall each unit of the main body including the display unit ex358 as well as the operation key unit ex366 is connected mutually, via a synchronous bus ex370, to a power supply circuit unit ex361, an operation input control unit ex362, a video signal processing unit ex355, a camera interface unit ex363, a liquid crystal display (LCD) control unit ex359, a modulation/demodulation unit ex352, a multiplexing/demultiplexing unit ex353, an audio signal processing unit ex354, the slot unit ex364, and the memory unit ex367.

When a call-end key or a power key is turned ON by a user's operation, the power supply circuit unit ex361 supplies the respective units with power from a battery pack so as to activate the cell phone ex114.

In the cellular phone ex114, the audio signal processing unit ex354 converts the audio signals collected by the audio input unit ex356 in voice conversation mode into digital audio signals under the control of the main control unit ex360 including a CPU, ROM, and RAM. Then, the modulation/demodulation unit ex352 performs spread spectrum processing on the digital audio signals, and the transmitting and receiving unit ex351 performs digital-to-analog conversion and frequency conversion on the data, so as to transmit the resulting data via the antenna ex350. Also, in the cellular phone ex114, the transmitting and receiving unit ex351 amplifies the data received by the antenna ex350 in voice conversation mode and performs frequency conversion and the analog-to-digital conversion on the data. Then, the modulation/demodulation unit ex352 performs inverse spread spectrum processing on the data, and the audio signal processing unit ex354 converts it into analog audio signals, so as to output them via the audio output unit ex357.

Furthermore, when an e-mail in data communication mode is transmitted, text data of the e-mail inputted by operating the operation key unit ex366 and others of the main body is sent out to the main control unit ex360 via the operation input control unit ex362. The main control unit ex360 causes the modulation/demodulation unit ex352 to perform spread spectrum processing on the text data, and the transmitting and receiving unit ex351 performs the digital-to-analog conversion and the frequency conversion on the resulting data to transmit the data to the base station ex110 via the antenna ex350. When an e-mail is received, processing that is approximately inverse to the processing for transmitting an e-mail is performed on the received data, and the resulting data is provided to the display unit ex358.

When video, still images, or video and audio in data communication mode is or are transmitted, the video signal processing unit ex355 compresses and codes video signals supplied from the camera unit ex365 using the moving picture coding method shown in each of embodiments (i.e., functions as the image coding apparatus according to the aspect of the present invention), and transmits the coded video data to the multiplexing/demultiplexing unit ex353. In contrast, during when the camera unit ex365 captures video, still images, and others, the audio signal processing unit ex354 codes audio signals collected by the audio input unit ex356, and transmits the coded audio data to the multiplexing/demultiplexing unit ex353.

The multiplexing/demultiplexing unit ex353 multiplexes the coded video data supplied from the video signal processing unit ex355 and the coded audio data supplied from the audio signal processing unit ex354, using a predetermined method. Then, the modulation/demodulation unit (modulation/demodulation circuit unit) ex352 performs spread spectrum processing on the multiplexed data, and the transmitting and receiving unit ex351 performs digital-to-analog conversion and frequency conversion on the data so as to transmit the resulting data via the antenna ex350.

When receiving data of a video file which is linked to a Web page and others in data communication mode or when receiving an e-mail with video and/or audio attached, in order to decode the multiplexed data received via the antenna ex350, the multiplexing/demultiplexing unit ex353 demultiplexes the multiplexed data into a video data bit stream and an audio data bit stream, and supplies the video signal processing unit ex355 with the coded video data and the audio signal processing unit ex354 with the coded audio data, through the synchronous bus ex370. The video signal processing unit ex355 decodes the video signal using a moving picture decoding method corresponding to the moving picture coding method shown in each of embodiments (i.e., functions as the image decoding apparatus according to the aspect of the present invention), and then the display unit ex358 displays, for instance, the video and still images included in the video file linked to the Web page via the LCD control unit ex359. Furthermore, the audio signal processing unit ex354 decodes the audio signal, and the audio output unit ex357 provides the audio.

Furthermore, similarly to the television ex300, a terminal such as the cellular phone ex114 probably have 3 types of implementation configurations including not only (i) a transmitting and receiving terminal including both a coding apparatus and a decoding apparatus, but also (ii) a transmitting terminal including only a coding apparatus and (iii) a receiving terminal including only a decoding apparatus. Although the digital broadcasting system ex200 receives and transmits the multiplexed data obtained by multiplexing audio data onto video data in the description, the multiplexed data may be data obtained by multiplexing not audio data but character data related to video onto video data, and may be not multiplexed data but video data itself.

As such, the moving picture coding method and the moving picture decoding method in each of embodiments can be used in any of the devices and systems described. Thus, the advantages described in each of embodiments can be obtained.

Furthermore, the present invention is not limited to embodiments, and various modifications and revisions are possible without departing from the scope of the present invention.

### (Embodiment 3)

Video data can be generated by switching, as necessary, between (i) the moving picture coding method or the moving picture coding apparatus shown in each of embodiments and (ii) a moving picture coding method or a moving picture coding apparatus in conformity with a different standard, such as MPEG-2, MPEG-4 AVC, and VC-1.

Here, when a plurality of video data that conforms to the different standards is generated and is then decoded, the decoding methods need to be selected to conform to the different standards. However, since to which standard each of the plurality of the video data to be decoded conform cannot be detected, there is a problem that an appropriate decoding method cannot be selected.

In order to solve the problem, multiplexed data obtained by multiplexing audio data and others onto video data has a structure including identification information indicating to which standard the video data conforms. The specific structure of the multiplexed data including the video data generated in the moving picture coding method and by the moving picture coding apparatus shown in each of embodiments will be hereinafter described. The multiplexed data is a digital stream in the MPEG-2 Transport Stream format.

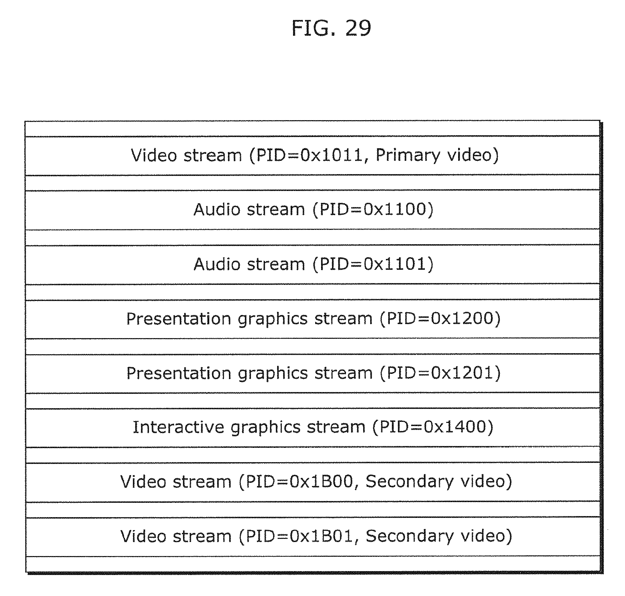

FIG. 29 illustrates a structure of the multiplexed data. As illustrated in FIG. 29, the multiplexed data can be obtained by multiplexing at least one of a video stream, an audio stream, a presentation graphics stream (PG), and an interactive graphics stream. The video stream represents primary video and secondary video of a movie, the audio stream (IG) represents a primary audio part and a secondary audio part to be mixed with the primary audio part, and the presentation graphics stream represents subtitles of the movie. Here, the primary video is normal video to be displayed on a screen, and the secondary video is video to be displayed on a smaller window in the primary video. Furthermore, the interactive graphics stream represents an interactive screen to be generated by arranging the GUI components on a screen. The video stream is coded in the moving picture coding method or by the moving picture coding apparatus shown in each of embodiments, or in a moving picture coding method or by a moving picture coding apparatus in conformity with a conventional standard, such as MPEG-2, MPEG-4 AVC, and VC-1. The audio stream is coded in accordance with a standard, such as Dolby-AC-3, Dolby Digital Plus, MLP, DTS, DTS-HD, and linear PCM.

Each stream included in the multiplexed data is identified by PID. For example, 0x1011 is allocated to the video stream to be used for video of a movie, 0x1100 to 0x111F are allocated to the audio streams, 0x1200 to 0x121F are allocated to the presentation graphics streams, 0x1400 to 0x141F are allocated to the interactive graphics streams, Ox1B00 to 0x1B1F are allocated to the video streams to be used for secondary video of the movie, and 0x1A00 to 0x1A1F are allocated to the audio streams to be used for the secondary audio to be mixed with the primary audio.

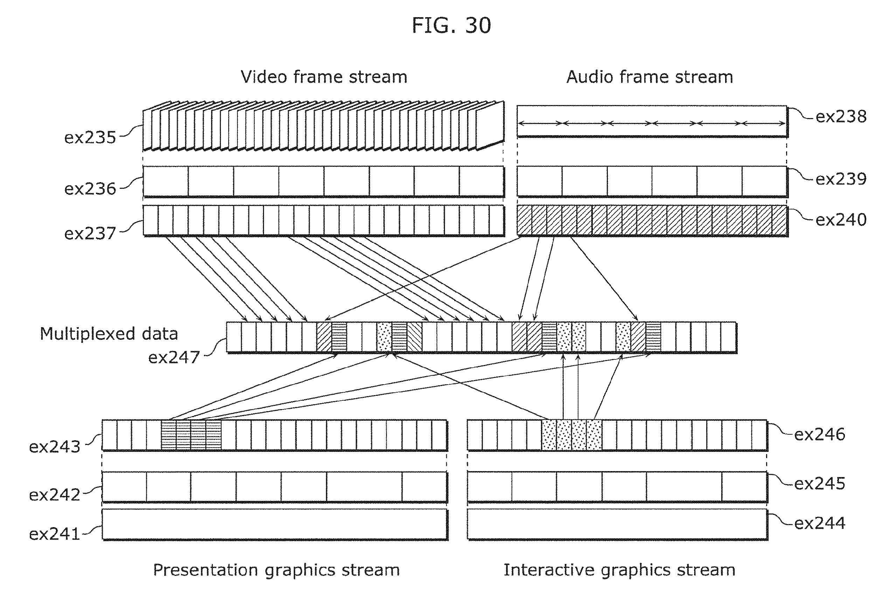

FIG. 30 schematically illustrates how data is multiplexed. First, a video stream ex235 composed of video frames and an audio stream ex238 composed of audio frames are transformed into a stream of PES packets ex236 and a stream of PES packets ex239, and further into TS packets ex237 and TS packets ex240, respectively. Similarly, data of a presentation graphics stream ex241 and data of an interactive graphics stream ex244 are transformed into a stream of PES packets ex242 and a stream of PES packets ex245, and further into TS packets ex243 and TS packets ex246, respectively. These TS packets are multiplexed into a stream to obtain multiplexed data ex247.

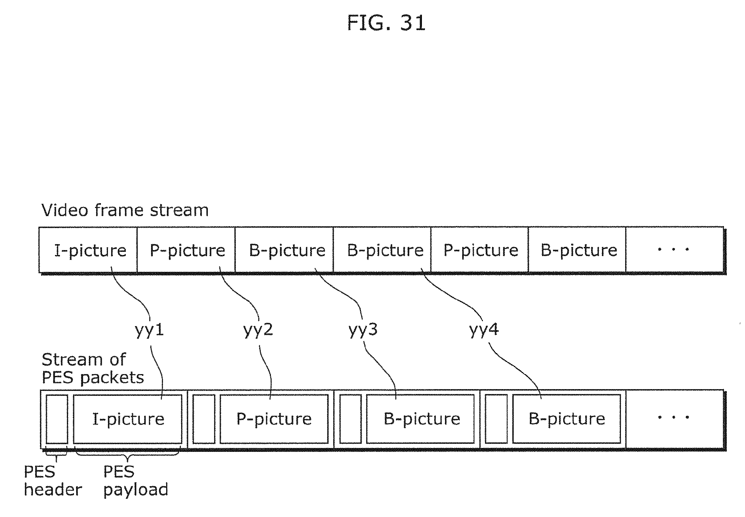

FIG. 31 illustrates how a video stream is stored in a stream of PES packets in more detail. The first bar in FIG. 31 shows a video frame stream in a video stream. The second bar shows the stream of PES packets. As indicated by arrows denoted as yy1, yy2, yy3, and yy4 in FIG. 31, the video stream is divided into pictures as I pictures, B pictures, and P pictures each of which is a video presentation unit, and the pictures are stored in a payload of each of the PES packets. Each of the PES packets has a PES header, and the PES header stores a Presentation Time-Stamp (PTS) indicating a display time of the picture, and a Decoding Time-Stamp (DTS) indicating a decoding time of the picture.

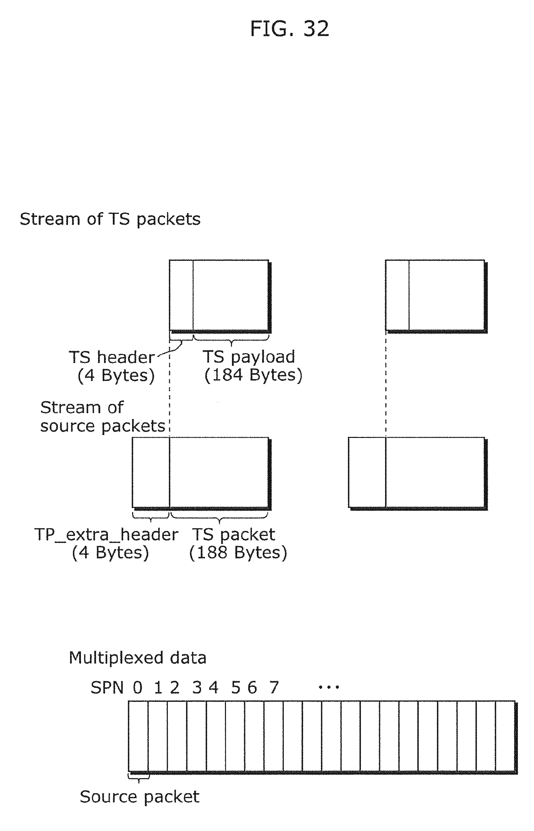

FIG. 32 illustrates a format of TS packets to be finally written on the multiplexed data. Each of the TS packets is a 188-byte fixed length packet including a 4-byte TS header having information, such as a PID for identifying a stream and a 184-byte TS payload for storing data. The PES packets are divided, and stored in the TS payloads, respectively. When a BD ROM is used, each of the TS packets is given a 4-byte TP_Extra_Header, thus resulting in 192-byte source packets. The source packets are written on the multiplexed data. The TP_Extra_Header stores information such as an Arrival_Time_Stamp (ATS). The ATS shows a transfer start time at which each of the TS packets is to be transferred to a PID filter. The source packets are arranged in the multiplexed data as shown at the bottom of FIG. 32. The numbers incrementing from the head of the multiplexed data are called source packet numbers (SPNs).

Each of the TS packets included in the multiplexed data includes not only streams of audio, video, subtitles and others, but also a Program Association Table (PAT), a Program Map Table (PMT), and a Program Clock Reference (PCR). The PAT shows what a PID in a PMT used in the multiplexed data indicates, and a PID of the PAT itself is registered as zero. The PMT stores PIDs of the streams of video, audio, subtitles and others included in the multiplexed data, and attribute information of the streams corresponding to the PIDs. The PMT also has various descriptors relating to the multiplexed data. The descriptors have information such as copy control information showing whether copying of the multiplexed data is permitted or not. The PCR stores STC time information corresponding to an ATS showing when the PCR packet is transferred to a decoder, in order to achieve synchronization between an Arrival Time Clock (ATC) that is a time axis of ATSs, and an System Time Clock (STC) that is a time axis of PTSs and DTSs.

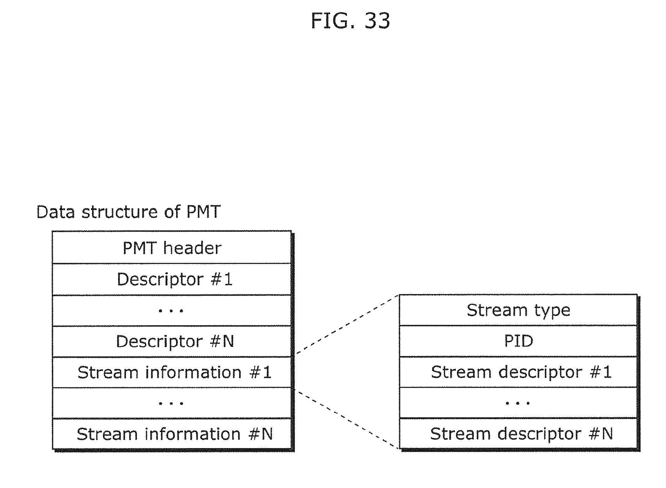

FIG. 33 illustrates the data structure of the PMT in detail. A PMT header is disposed at the top of the PMT. The PMT header describes the length of data included in the PMT and others. A plurality of descriptors relating to the multiplexed data is disposed after the PMT header. Information such as the copy control information is described in the descriptors. After the descriptors, a plurality of pieces of stream information relating to the streams included in the multiplexed data is disposed. Each piece of stream information includes stream descriptors each describing information, such as a stream type for identifying a compression codec of a stream, a stream PID, and stream attribute information (such as a frame rate or an aspect ratio). The stream descriptors are equal in number to the number of streams in the multiplexed data.

When the multiplexed data is recorded on a recording medium and others, it is recorded together with multiplexed data information files.

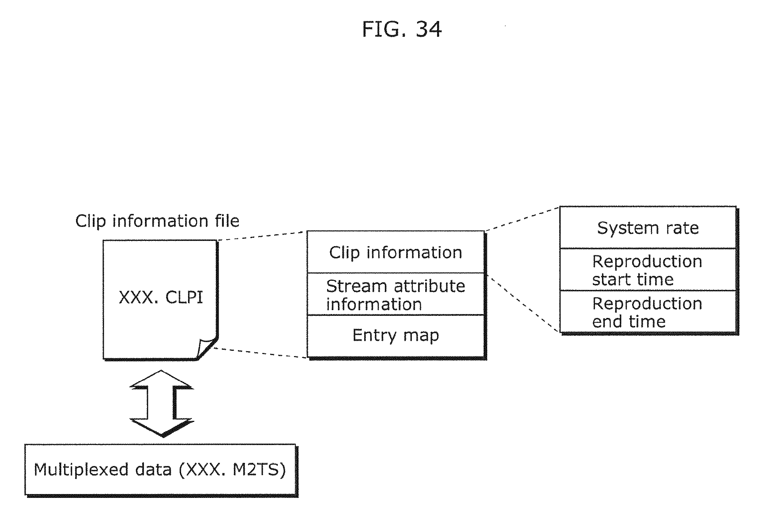

Each of the multiplexed data information files is management information of the multiplexed data as shown in FIG. 34. The multiplexed data information files are in one to one correspondence with the multiplexed data, and each of the files includes multiplexed data information, stream attribute information, and an entry map.

As illustrated in FIG. 34, the multiplexed data information includes a system rate, a reproduction start time, and a reproduction end time. The system rate indicates the maximum transfer rate at which a system target decoder to be described later transfers the multiplexed data to a PID filter. The intervals of the ATSs included in the multiplexed data are set to not higher than a system rate. The reproduction start time indicates a PTS in a video frame at the head of the multiplexed data. An interval of one frame is added to a PTS in a video frame at the end of the multiplexed data, and the PTS is set to the reproduction end time.

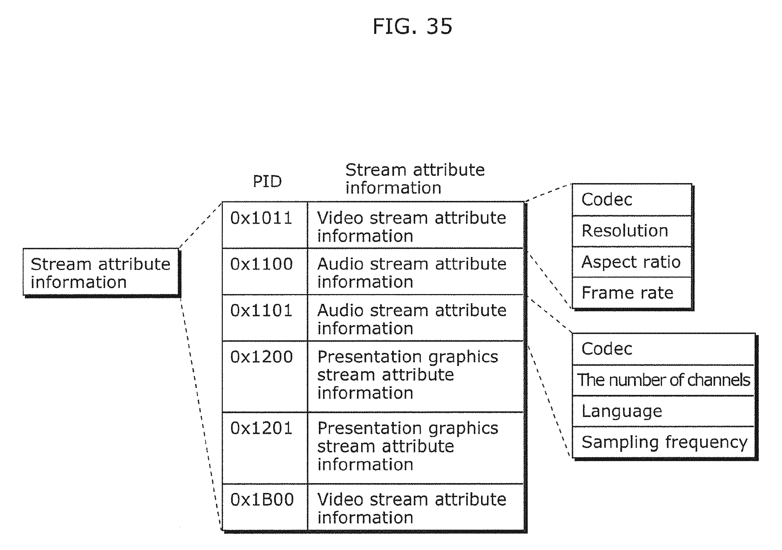

As shown in FIG. 35, a piece of attribute information is registered in the stream attribute information, for each PID of each stream included in the multiplexed data. Each piece of attribute information has different information depending on whether the corresponding stream is a video stream, an audio stream, a presentation graphics stream, or an interactive graphics stream. Each piece of video stream attribute information carries information including what kind of compression codec is used for compressing the video stream, and the resolution, aspect ratio and frame rate of the pieces of picture data that is included in the video stream. Each piece of audio stream attribute information carries information including what kind of compression codec is used for compressing the audio stream, how many channels are included in the audio stream, which language the audio stream supports, and how high the sampling frequency is. The video stream attribute information and the audio stream attribute information are used for initialization of a decoder before the player plays back the information.

In the present embodiment, the multiplexed data to be used is of a stream type included in the PMT. Furthermore, when the multiplexed data is recorded on a recording medium, the video stream attribute information included in the multiplexed data information is used. More specifically, the moving picture coding method or the moving picture coding apparatus described in each of embodiments includes a step or a unit for allocating unique information indicating video data generated by the moving picture coding method or the moving picture coding apparatus in each of embodiments, to the stream type included in the PMT or the video stream attribute information. With the configuration, the video data generated by the moving picture coding method or the moving picture coding apparatus described in each of embodiments can be distinguished from video data that conforms to another standard.

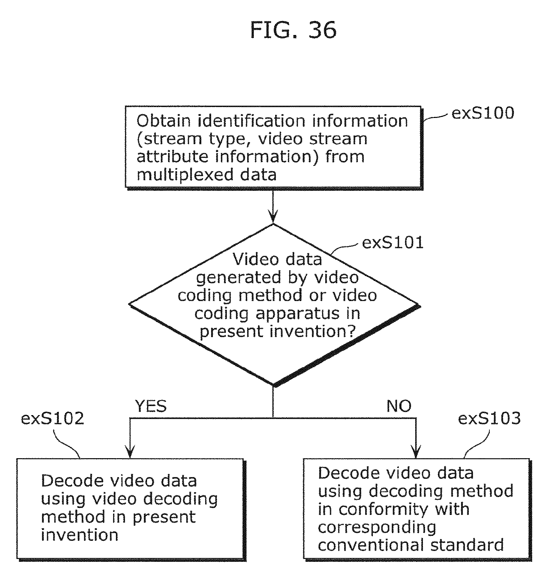

Furthermore, FIG. 36 illustrates steps of the moving picture decoding method according to the present embodiment. In Step exS100, the stream type included in the PMT or the video stream attribute information included in the multiplexed data information is obtained from the multiplexed data. Next, in Step exS101, it is determined whether or not the stream type or the video stream attribute information indicates that the multiplexed data is generated by the moving picture coding method or the moving picture coding apparatus in each of embodiments. When it is determined that the stream type or the video stream attribute information indicates that the multiplexed data is generated by the moving picture coding method or the moving picture coding apparatus in each of embodiments, in Step exS102, decoding is performed by the moving picture decoding method in each of embodiments. Furthermore, when the stream type or the video stream attribute information indicates conformance to the conventional standards, such as MPEG-2, MPEG-4 AVC, and VC-1, in Step exS103, decoding is performed by a moving picture decoding method in conformity with the conventional standards.

As such, allocating a new unique value to the stream type or the video stream attribute information enables determination whether or not the moving picture decoding method or the moving picture decoding apparatus that is described in each of embodiments can perform decoding. Even when multiplexed data that conforms to a different standard is input, an appropriate decoding method or apparatus can be selected. Thus, it becomes possible to decode information without any error. Furthermore, the moving picture coding method or apparatus, or the moving picture decoding method or apparatus in the present embodiment can be used in the devices and systems described above.

### (Embodiment 4)

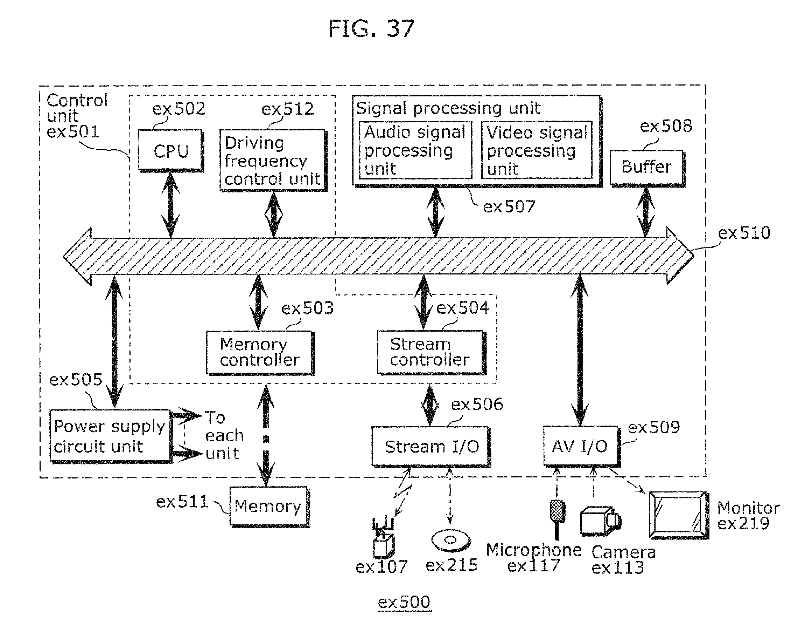

Each of the moving picture coding method, the moving picture coding apparatus, the moving picture decoding method, and the moving picture decoding apparatus in each of embodiments is typically achieved in the form of an integrated circuit or a Large Scale Integrated (LSI) circuit. As an example of the LSI, FIG. 37 illustrates a configuration of the LSI ex500 that is made into one chip. The LSI ex500 includes elements ex501, ex502, ex503, ex504, ex505, ex506, ex507, ex508, and ex509 to be described below, and the elements are connected to each other through a bus ex510. The power supply circuit unit ex505 is activated by supplying each of the elements with power when the power supply circuit unit ex505 is turned on.

For example, when coding is performed, the LSI ex500 receives an AV signal from a microphone ex117, a camera ex113, and others through an AV IO ex509 under control of a control unit ex501 including a CPU ex502, a memory controller ex503, a stream controller ex504, and a driving frequency control unit ex512. The received AV signal is temporarily stored in an external memory ex511, such as an SDRAM. Under control of the control unit ex501, the stored data is segmented into data portions according to the processing amount and speed to be transmitted to a signal processing unit ex507. Then, the signal processing unit ex507 codes an audio signal and/or a video signal. Here, the coding of the video signal is the coding described in each of embodiments. Furthermore, the signal processing unit ex507 sometimes multiplexes the coded audio data and the coded video data, and a stream IO ex506 provides the multiplexed data outside. The provided multiplexed data is transmitted to the base station ex107, or written on the recording medium ex215. When data sets are multiplexed, the data should be temporarily stored in the buffer ex508 so that the data sets are synchronized with each other.

Although the memory ex511 is an element outside the LSI ex500, it may be included in the LSI ex500. The buffer ex508 is not limited to one buffer, but may be composed of buffers. Furthermore, the LSI ex500 may be made into one chip or a plurality of chips.

Furthermore, although the control unit ex501 includes the CPU ex502, the memory controller ex503, the stream controller ex504, the driving frequency control unit ex512, the configuration of the control unit ex501 is not limited to such. For example, the signal processing unit ex507 may further include a CPU. Inclusion of another CPU in the signal processing unit ex507 can improve the processing speed. Furthermore, as another example, the CPU ex502 may serve as or be a part of the signal processing unit ex507, and, for example, may include an audio signal processing unit. In such a case, the control unit ex501 includes the signal processing unit ex507 or the CPU ex502 including a part of the signal processing unit ex507.

The name used here is LSI, but it may also be called IC, system LSI, super LSI, or ultra LSI depending on the degree of integration.

Moreover, ways to achieve integration are not limited to the LSI, and a special circuit or a general purpose processor and so forth can also achieve the integration. Field Programmable Gate Array (FPGA) that can be programmed after manufacturing LSIs or a reconfigurable processor that allows re-configuration of the connection or configuration of an LSI can be used for the same purpose. This sort of programmable logic device is capable of executing the image coding method or image decoding method according to the above-described embodiment typically by loading or reading, from memory or the like, a program implemented in software or firmware.

In the future, with advancement in semiconductor technology, a brand-new technology may replace LSI. The functional blocks can be integrated using such a technology. The possibility is that the present invention is applied to biotechnology.

### (Embodiment 5)

When video data generated in the moving picture coding method or by the moving picture coding apparatus described in each of embodiments is decoded, compared to when video data that conforms to a conventional standard, such as MPEG-2, MPEG-4 AVC, and VC-1 is decoded, the processing amount probably increases. Thus, the LSI ex500 needs to be set to a driving frequency higher than that of the CPU ex502 to be used when video data in conformity with the conventional standard is decoded. However, when the driving frequency is set higher, there is a problem that the power consumption increases.

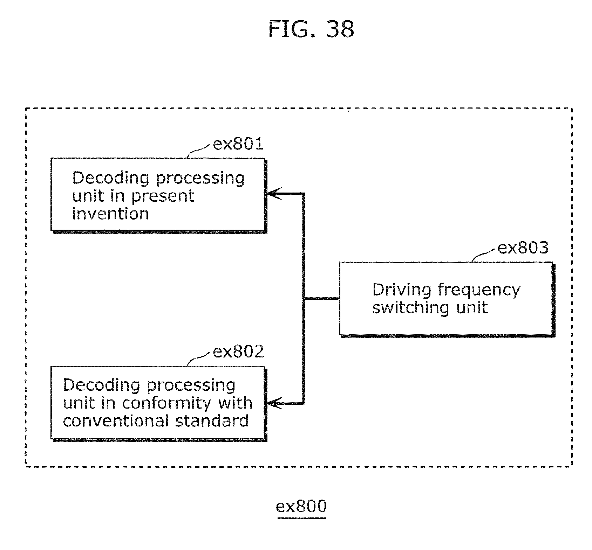

In order to solve the problem, the moving picture decoding apparatus, such as the television ex300 and the LSI ex500 is configured to determine to which standard the video data conforms, and switch between the driving frequencies according to the determined standard. FIG. 38 illustrates a configuration ex800 in the present embodiment. A driving frequency switching unit ex803 sets a driving frequency to a higher driving frequency when video data is generated by the moving picture coding method or the moving picture coding apparatus described in each of embodiments. Then, the driving frequency switching unit ex803 instructs a decoding processing unit ex801 that executes the moving picture decoding method described in each of embodiments to decode the video data. When the video data conforms to the conventional standard, the driving frequency switching unit ex803 sets a driving frequency to a lower driving frequency than that of the video data generated by the moving picture coding method or the moving picture coding apparatus described in each of embodiments. Then, the driving frequency switching unit ex803 instructs the decoding processing unit ex802 that conforms to the conventional standard to decode the video data.

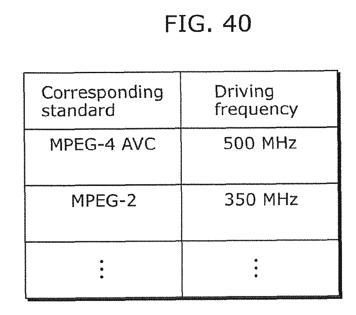

More specifically, the driving frequency switching unit ex803 includes the CPU ex502 and the driving frequency control unit ex512 in FIG. 37. Here, each of the decoding processing unit ex801 that executes the moving picture decoding method described in each of embodiments and the decoding processing unit ex802 that conforms to the conventional standard corresponds to the signal processing unit ex507 in FIG. 37. The CPU ex502 determines to which standard the video data conforms. Then, the driving frequency control unit ex512 determines a driving frequency based on a signal from the CPU ex502. Furthermore, the signal processing unit ex507 decodes the video data based on the signal from the CPU ex502. For example, the identification information described in Embodiment 3 is probably used for identifying the video data. The identification information is not limited to the one described in Embodiment 3 but may be any information as long as the information indicates to which standard the video data conforms. For example, when which standard video data conforms to can be determined based on an external signal for determining that the video data is used for a television or a disk, etc., the determination may be made based on such an external signal. Furthermore, the CPU ex502 selects a driving frequency based on, for example, a look-up table in which the standards of the video data are associated with the driving frequencies as shown in FIG. 40. The driving frequency can be selected by storing the look-up table in the buffer ex508 and in an internal memory of an LSI, and with reference to the look-up table by the CPU ex502.

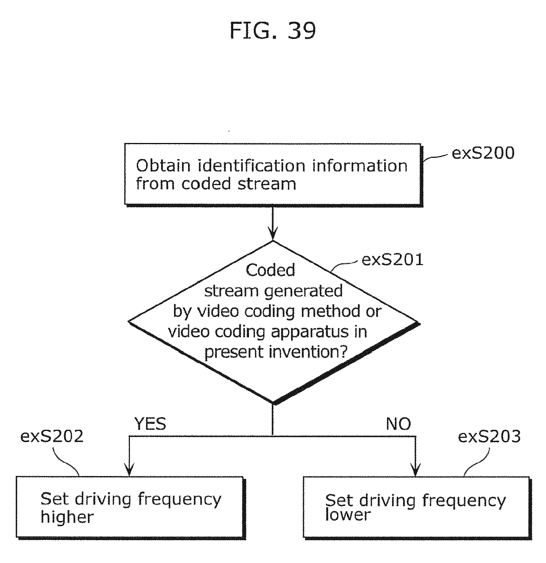

FIG. 39 illustrates steps for executing a method in the present embodiment. First, in Step exS200, the signal processing unit ex507 obtains identification information from the multiplexed data. Next, in Step exS201, the CPU ex502 determines whether or not the video data is generated by the coding method and the coding apparatus described in each of embodiments, based on the identification information. When the video data is generated by the moving picture coding method and the moving picture coding apparatus described in each of embodiments, in Step exS202, the CPU ex502 transmits a signal for setting the driving frequency to a higher driving frequency to the driving frequency control unit ex512. Then, the driving frequency control unit ex512 sets the driving frequency to the higher driving frequency. On the other hand, when the identification information indicates that the video data conforms to the conventional standard, such as MPEG-2, MPEG-4 AVC, and VC-1, in Step exS203, the CPU ex502 transmits a signal for setting the driving frequency to a lower driving frequency to the driving frequency control unit ex512. Then, the driving frequency control unit ex512 sets the driving frequency to the lower driving frequency than that in the case where the video data is generated by the moving picture coding method and the moving picture coding apparatus described in each of embodiment.

Furthermore, along with the switching of the driving frequencies, the power conservation effect can be improved by changing the voltage to be applied to the LSI ex500 or an apparatus including the LSI ex500. For example, when the driving frequency is set lower, the voltage to be applied to the LSI ex500 or the apparatus including the LSI ex500 is probably set to a voltage lower than that in the case where the driving frequency is set higher.

Furthermore, when the processing amount for decoding is larger, the driving frequency may be set higher, and when the processing amount for decoding is smaller, the driving frequency may be set lower as the method for setting the driving frequency. Thus, the setting method is not limited to the ones described above. For example, when the processing amount for decoding video data in conformity with MPEG-4 AVC is larger than the processing amount for decoding video data generated by the moving picture coding method and the moving picture coding apparatus described in each of embodiments, the driving frequency is probably set in reverse order to the setting described above.

Furthermore, the method for setting the driving frequency is not limited to the method for setting the driving frequency lower. For example, when the identification information indicates that the video data is generated by the moving picture coding method and the moving picture coding apparatus described in each of embodiments, the voltage to be applied to the LSI ex500 or the apparatus including the LSI ex500 is probably set higher. When the identification information indicates that the video data conforms to the conventional standard, such as MPEG-2, MPEG-4 AVC, and VC-1, the voltage to be applied to the LSI ex500 or the apparatus including the LSI ex500 is probably set lower. As another example, when the identification information indicates that the video data is generated by the moving picture coding method and the moving picture coding apparatus described in each of embodiments, the driving of the CPU ex502 does not probably have to be suspended. When the identification information indicates that the video data conforms to the conventional standard, such as MPEG-2, MPEG-4 AVC, and VC-1, the driving of the CPU ex502 is probably suspended at a given time because the CPU ex502 has extra processing capacity. Even when the identification information indicates that the video data is generated by the moving picture coding method and the moving picture coding apparatus described in each of embodiments, in the case where the CPU ex502 has extra processing capacity, the driving of the CPU ex502 is probably suspended at a given time. In such a case, the suspending time is probably set shorter than that in the case where when the identification information indicates that the video data conforms to the conventional standard, such as MPEG-2, MPEG-4 AVC, and VC-1.

Accordingly, the power conservation effect can be improved by switching between the driving frequencies in accordance with the standard to which the video data conforms. Furthermore, when the LSI ex500 or the apparatus including the LSI ex500 is driven using a battery, the battery life can be extended with the power conservation effect.

### (Embodiment 6)

There are cases where a plurality of video data that conforms to different standards, is provided to the devices and systems, such as a television and a cellular phone. In order to enable decoding the plurality of video data that conforms to the different standards, the signal processing unit ex507 of the LSI ex500 needs to conform to the different standards. However, the problems of increase in the scale of the circuit of the LSI ex500 and increase in the cost arise with the individual use of the signal processing units ex507 that conform to the respective standards.

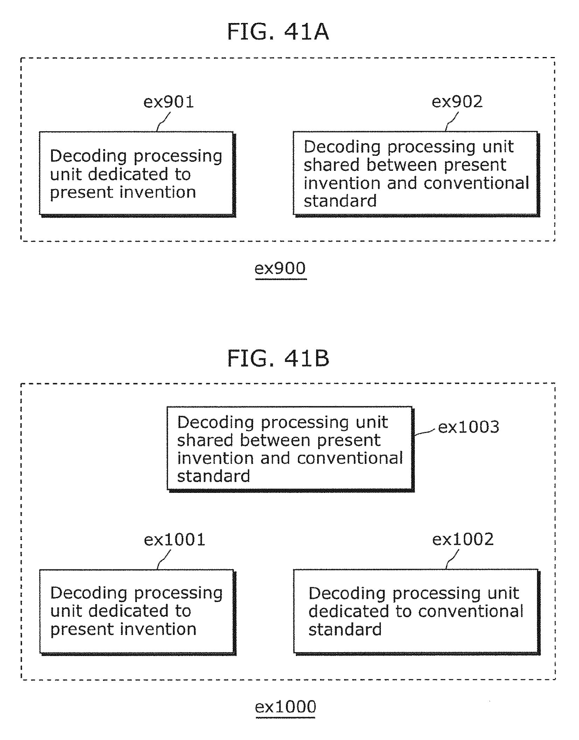

In order to solve the problem, what is conceived is a configuration in which the decoding processing unit for implementing the moving picture decoding method described in each of embodiments and the decoding processing unit that conforms to the conventional standard, such as MPEG-2, MPEG-4 AVC, and VC-1 are partly shared. Ex900 in FIG. 41A shows an example of the configuration. For example, the moving picture decoding method described in each of embodiments and the moving picture decoding method that conforms to MPEG-4 AVC have, partly in common, the details of processing, such as entropy coding, inverse quantization, deblocking filtering, and motion compensated prediction. The details of processing to be shared probably include use of a decoding processing unit ex902 that conforms to MPEG-4 AVC. In contrast, a dedicated decoding processing unit ex901 is probably used for other processing which is unique to an aspect of the present invention and does not conform to MPEG-4 AVC. The decoding processing unit for implementing the moving picture decoding method described in each of embodiments may be shared for the processing to be shared, and a dedicated decoding processing unit may be used for processing unique to that of MPEG-4 AVC.

Furthermore, ex1000 in FIG. 41B shows another example in that processing is partly shared. This example uses a configuration including a dedicated decoding processing unit ex1001 that supports the processing unique to an aspect of the present invention, a dedicated decoding processing unit ex1002 that supports the processing unique to another conventional standard, and a decoding processing unit ex1003 that supports processing to be shared between the moving picture decoding method according to the aspect of the present invention and the conventional moving picture decoding method. Here, the dedicated decoding processing units ex1001 and ex1002 are not necessarily specialized for the processing according to the aspect of the present invention and the processing of the conventional standard, respectively, and may be the ones capable of implementing general processing. Furthermore, the configuration of the present embodiment can be implemented by the LSI ex500.

As such, reducing the scale of the circuit of an LSI and reducing the cost are possible by sharing the decoding processing unit for the processing to be shared between the moving picture decoding method according to the aspect of the present invention and the moving picture decoding method in conformity with the conventional standard.

### [Industrial Applicability]

The image decoding method and the image coding method according to the present invention produce an advantageous effect of reducing processing load, and are applicable to a variety of purposes such as accumulation, transmission, and communication of an image. The image decoding method and the image coding method according to the present invention can be used in information display devices or imaging devices such as a television, a digital video recorder, a car navigation system, a cellular phone, a digital camera, a digital video camera, and so on.

### [Reference Signs List]

- 10, 20: image decoding apparatus
- 30, 40: image coding apparatus
- 11, 21: flag obtaining unit
- 12, 22: decoding unit
- 13, 34: deblocking filter
- 14, 23, 35, 44: SAO unit
- 31, 41: flag coding unit
- 32, 42: coding unit
- 33, 43: reconstruction unit
- 100: image coding apparatus
- 101: subtractor
- 102: transformation unit
- 103: quantization unit
- 104: entropy coding unit
- 105: inverse quantization unit
- 106: inverse transformation unit
- 107: adder
- 109: deblocking filter
- 110: SAO unit
- 111: boundary control unit
- 112: prediction unit
- 200: image decoding apparatus
- 204: entropy decoding unit
- 205: inverse quantization unit
- 206: inverse transformation unit
- 207: adder
- 209: deblocking filter
- 210: SAO unit
- 211: boundary control unit
- 212: prediction unit

## Claims

1. An image decoding method of decoding a coded picture, the image decoding method comprising:
obtaining a boundary control flag for jointly controlling a deblocking filter operation and a sample adaptive offset operation for a slice boundary of a current slice to be decoded included in the coded picture;
decoding the current slice;
performing the deblocking filter operation based on the boundary control flag only on at least one of a top slice boundary or a left slice boundary among all slice boundaries of the current slice that has been decoded; and
performing the sample adaptive offset operation dependent on the boundary control flag only on the at least one of the top slice boundary or the left slice boundary among all the slice boundaries of the current slice that has been decoded.

2. An image decoding method of decoding a coded picture, the image decoding method comprising:
obtaining a boundary control flag for controlling a sample adaptive offset operation for a slice boundary of a current slice to be decoded included in the coded picture;
decoding the current slice; and
performing the sample adaptive offset operation in accordance with the boundary control flag jointly on at least one pixel in the current slice that has been decoded and on at least one pixel in a different slice that has been decoded, the pixels being in a vicinity of at least one of a top slice boundary or a left slice boundary of the current slice.

3. The image decoding method according to Claim 1 or 2,
wherein in the performing of the sample adaptive offset operation,
an operation mode of the sample adaptive offset operation is switched in accordance with the boundary control flag, and the sample adaptive offset operation is performed according to the operation mode selected as a result of the switching.

4. The image decoding method according to Claim 3,
wherein in the performing of the sample adaptive offset operation,
when the boundary control flag indicates 0, the operation mode of the sample adaptive offset operation is switched to a padding mode which adds an offset value of 0 to a pixel designated as an offset candidate, and the sample adaptive offset operation is performed according to the padding mode.

5. The image decoding method according to Claim 4,
wherein the sample adaptive offset operation includes a plurality of operation modes classified based on characteristics in an edge of the pixel designated as the offset candidate, each of the plurality of operation modes being allocated an edge index, and
in the performing of the sample adaptive offset operation,
when the boundary control flag indicates 0, the edge index is set to 0 to switch the operation mode of the sample adaptive offset operation to the padding mode.

6. The image decoding method according to Claim 1,
wherein the deblocking filter operation switches between ON and OFF based on the boundary control flag, and the deblocking filter operation is performed only when the deblocking filter operation is switched ON.

7. The image decoding method according to Claim 1,
wherein when the boundary control flag indicates 0,
the deblocking filter operation is switched OFF to bypass the deblocking filter operation, and
in the performing of the sample adaptive offset operation, the operation mode of the sample adaptive offset operation is switched to a padding mode which adds an offset value of 0 to a pixel value, and the sample adaptive offset operation is performed according to the padding mode.

8. The image decoding method according to Claim 4 or 5,
wherein when a pixel designated as a candidate for the sample adaptive offset operation dependent on the boundary control flag is a specific pixel also designated as a candidate for a sample adaptive offset operation dependent on an other boundary control flag for a different slice,
in the performing of the sample adaptive offset operation,
when at least one of the boundary control flag or the other boundary control flag indicates 0,
the operation mode of the sample adaptive offset operation is switched to the padding mode, and the sample adaptive offset operation is performed on the specific pixel according to the padding mode.

9. An image coding method of coding a picture, the image coding method comprising:
coding a boundary control flag for jointly controlling a deblocking filter operation and a sample adaptive offset operation for a slice boundary of a current slice to be coded included in the picture;
coding the current slice;
reconstructing the current slice from data generated by the coding of the current slice;
performing the deblocking filter operation based on the boundary control flag only on at least one of a top slice boundary or a left slice boundary among all slice boundaries of the current slice that has been reconstructed; and
performing the sample adaptive offset operation dependent on the boundary control flag only on the at least one of the top slice boundary or the left slice boundary among all the slice boundaries of the current slice that has been reconstructed.

10. An image coding method of coding a picture, the image coding method comprising:
coding a boundary control flag for controlling a sample adaptive offset operation for a slice boundary of a current slice to be coded included in the picture;
coding the current slice;
reconstructing the current slice from data generated by the coding of the current slice; and
performing the sample adaptive offset operation in accordance with the boundary control flag jointly on at least one pixel in the current slice that has been reconstructed and on at least one pixel in a different slice that has been reconstructed, the pixels being in a vicinity of at least one of a top slice boundary or a left slice boundary of the current slice.

11. An image decoding apparatus which decodes a coded picture, the image decoding apparatus comprising:
processing circuitry; and
storage accessible from the processing circuitry,
wherein the processing circuitry executes:
obtaining a boundary control flag for jointly controlling a deblocking filter operation and a sample adaptive offset operation for a slice boundary of a current slice to be decoded included in the coded picture;
decoding the current slice;
performing the deblocking filter operation based on the boundary control flag only on at least one of a top slice boundary or a left slice boundary among all slice boundaries of the current slice that has been decoded; and
performing the sample adaptive offset operation dependent on the boundary control flag only on the at least one of the top slice boundary or the left slice boundary among all the slice boundaries of the current slice that has been decoded.

12. An image decoding apparatus which decodes a coded picture, the image decoding apparatus comprising:
processing circuitry; and
storage accessible from the processing circuitry,
wherein the processing circuitry executes:
obtaining a boundary control flag for controlling a sample adaptive offset operation for a slice boundary of a current slice to be decoded included in the coded picture;
decoding the current slice; and
performing the sample adaptive offset operation in accordance with the boundary control flag jointly on at least one pixel in the current slice that has been decoded and on at least one pixel in a different slice that has been decoded, the pixels being in a vicinity of at least one of a top slice boundary or a left slice boundary of the current slice.

13. An image coding apparatus which codes a picture, the image coding apparatus comprising:
processing circuitry; and
storage accessible from the processing circuitry,
wherein the processing circuitry executes:
coding a boundary control flag for jointly controlling a deblocking filter operation and a sample adaptive offset operation for a slice boundary of a current slice to be coded included in the picture;
coding the current slice;
reconstructing the current slice from data generated by the coding of the current slice;
performing the deblocking filter operation based on the boundary control flag only on at least one of a top slice boundary or a left slice boundary among all slice boundaries of the current slice that has been reconstructed; and
performing the sample adaptive offset operation dependent on the boundary control flag only on the at least one of the top slice boundary or the left slice boundary among all the slice boundaries of the current slice that has been reconstructed.

14. An image coding apparatus which codes a picture, the image coding apparatus comprising:
processing circuitry; and
storage accessible from the processing circuitry,
wherein the processing circuitry executes:
coding a boundary control flag for controlling a sample adaptive offset operation for a slice boundary of a current slice to be coded included in the picture;
coding the current slice;
reconstructing the current slice from data generated by the coding of the current slice; and
performing the sample adaptive offset operation in accordance with the boundary control flag jointly on at least one pixel in the current slice that has been reconstructed and on at least one pixel in a different slice that has been reconstructed, the pixels being in a vicinity of at least one of a top slice boundary or a left slice boundary of the current slice.

15. An image coding and decoding apparatus comprising:
the image decoding apparatus according to Claim 11 or 12; and
the image coding apparatus according to Claim 13 or 14.
